# EUROPÄISCHE PATENTSCHRIFT

(11) **EP 3 285 989 B1**
(45) Veröffentlichungstag und Bekanntmachung des Hinweises auf die Patenterteilung: **13.04.2022**
(21) Anmeldenummer: 16717638.7
(22) Anmeldetag: 21.04.2016
(51) Int. Cl.: B33Y 80/00, B29C 64/106, B29C 64/188

(54) **VERFAHREN ZUR HERSTELLUNG VON 3D OBJEKTEN**
METHOD FOR THE PREPARATION OF 3D OBJECTS
PROCÉDÉ DE FABRICATION D'OBJETS 3D

(30) Priorität: 21.04.2015 EP 15164524
(43) Veröffentlichungstag der Anmeldung: 28.02.2018
(73) Patentinhaber: Covestro Deutschland AG, 51373 Leverkusen (DE)
(72) Erfinder: BÜSGEN, Thomas, 51063 Köln (DE); ACHTEN, Dirk, 51375 Leverkusen (DE); DEGIORGIO, Nicolas, 47807 Krefeld (DE); WAGNER, Roland, 51375 Leverkusen (DE); MICHAELIS, Thomas, 51375 Leverkusen (DE); BEENEN-FUCHS, Maria, Elisabeth, 50769 Köln (DE)
(74) Vertreter: Levpat
(86) Internationale Anmeldenummer: PCT/EP2016/058844
(87) Internationale Veröffentlichungsnummer: WO 2016/170030

(56) Entgegenhaltungen:
- WO-A1-2009/055451
- WO-A2-2008/151063
- WO-A2-2010/126708
- US-A1- 2014 182 170

## Beschreibung

### Verfahren zur Herstellung von 3D Objekten

Die Erfindung betrifft insbesondere ein Verfahren zur Fertigung dreidimensionaler Körper wobei flächiger Kunststoffbauteile, die mit gängigen Rapid-Prototyping-Verfahren (additive Fertigung) hergestellt werden, anschließend zu dreidimensionalen Objekten verformt werden. Derartige flächige Kunststoffbauteile können beispielsweise in der Herstellung von Schuhmaterial oder Kleidungsmaterial verwendet werden.

Schichtweise aufgebaute Bauteile und Verfahren zu deren Herstellung sind unter dem Begriff der Additiven Fertigung oder generativen Fertigungsverfahren (auch Rapid Prototyping, Rapid Manufacturing, Rapid Tooling, Additive Manufacturing genannt) bekannt. Beispiele für derartige Verfahren sind das selektive Lasersintern oder das dreidimensionale Drucken wie es beispielsweise in der WO 00/26026, der DE 10 2004 014 806, der DE 102007009277, der WO/2014/015037, der WO 2014/100462 oder der EP 293 00 09 beschrieben ist.

Weitere generative Verfahren und Vorrichtungen zur Herstellung 3-dimensionaler Bauteile sind beispielsweise aus der EP 0429 196 A2, DE 92 18 423 U1,DE 195 15 165 C2 oder der DE 101 27 383 bekannt.

Angepasste Einlegesohlen aus dem 3D-Drucker sind bereits bekannt und werden bereits kommerziell angeboten, z.B. von Sols (http://www.sols.com) und RS Print (http://www.rsprint.be).

Die WO 2014/100462 eschreibt ein Verfahren zur Herstellung einer individuell angepassten Sohle eines Schuhs mittels 3D-Druck.

Die WO2014/100462 offenbart ebenfalls ein Verfahren zur Herstellung eines dreidimensionalen Objektes, dessen Außenfläche wenigstens einen Flächenabschnitt umfasst, der erzeugt wird indem mittels eines additiven Fertigungsverfahrens auf einer planen Basisplatte zunächst ein Flächenabschnitt in zweidimensionaler Form produziert wird, umfassend die folgenden Schritte: Auftragen wenigstens eines aushärtbaren Polymers; Auftragen einer zweiten Schicht auf die erste Schicht mittels des gleichen schichtaufbauenden Formgebungsverfahren; Aushärten der Schichten; Ablösen des ausgehärteten Flächenabschnitts von der planen Basisplatte und Formen des ausgehärteten Flächenabschnitts in ein dreidimensionales Objekt zum Beispiel durch Biegen des zweidimensionalen Flächenabschnitts.

Auch die Idee ganze Schuhe mit einem 3D-Drucker zu fertigen gibt es schon. Doch wird bisher immer versucht, den Schuh im Ganzen zu drucken (siehe z. B. http://3dshoes.com/, http://continuumfashion.com/shoes.php oder http://recreus.com/en/15free-3d-models (Stand 08.04.2015)).

Die WO/2014/015037 beschreibt ein Verfahren zum 3D Druck eines Objektes, insbesondere eines kompletten Schuhs, welches das 3D Drucken einer Sohle und das 3D Drucken eines Oberteils erfordert. Hierbei wird das Oberteil des Schuhs direkt als fertiger 3D Druck erzeugt. Dieses Verfahren ist jedoch langwierig und erfordert eine hohe Raumtemperatur um die multiplen Schichten eines Objektes nach dem in der WO/2014/015037 beschrieben Verfahren herzustellen.

Es ist eine Aufgabe der Erfindung die Nachteile des Standes der Technik wenigstens zu einem Teil zu überwinden.

Es ist weiterhin eine Aufgabe der Erfindung ein neues, schnelleres und vereinfachtes Verfahren zur Herstellung dreidimensionaler Objekte wie z. B. Objekten mit großer Oberfläche und geringer Dicke wie ein Oberschuh, ein Stützkorsett oder ein Protektor (z. B. Schulterprotektor, Oberarmprotektor, Knieprotektor), bereit zu stellen.

### Detaillierte Beschreibung

Der Erfindung liegt die Erkenntnis zu Grunde, dass sich mittels topologischer Methoden viele Bauteile mit einer großer Oberfläche und geringen Dicke der Außenwände mathematisch in eine durchgehende, flächige, "zweidimensionale" Form umwandeln lassen. Die Topologie eines dreidimensionalen Objektes lässt sich durch Formen der zweidimensionalen Form mit jeweils individuell angepasster Struktur in einfacher Weise herstellen.

Die Erfindung betrifft ein Verfahren zur Herstellung eines dreidimensionalen Objektes, dessen Außenfläche wenigstens einen Flächenabschnitt umfasst, der erzeugt wird indem mittels eines additiven Fertigungsverfahrens (schichtaufbauendes Formgebungsverfahren) auf einer planen Basisplatte zunächst ein Flächenabschnitt in zweidimensionaler Form produziert wird, umfassend die folgenden Schritte:
I) Auftragen wenigstens eines aushärtbaren Polymers oder aushärtbaren Reaktionsharzes mit jeweils einem Elastizitätsmodul (E-Modul) im gehärteten Zustand von < 250 MPa in fließfähiger Form als Materialbahnen auf eine plane Basisplatte mittels eines schichtaufbauenden Formgebungsverfahrens zur Erstellung einer ersten Schicht;
II) Auftragen einer zweiten Schicht auf die erste Schicht mittels des gleichen schichtaufbauenden Formgebungsverfahren wie in Schritt I);
III) optional Auftragen von 1 bis 48 weiteren Schichten gemäß Schritt II) wobei jeweils eine neue Schicht auf die jeweils vorherige Schicht aufgetragen wird;
IV) Aushärten der Schichten;
V) Ablösen des ausgehärteten Flächenabschnitt von der planen Basisplatte;
VI) Formen des ausgehärteten Flächenabschnitts in ein dreidimensionales Objekt durch Biegen des zweidimensionalen Flächenabschnitts, Falten des zweidimensionalen Flächenabschnitts, Formgebung durch Auflegen des zweidimensionalen Flächenabschnitts auf einen Leisten, Thermoformen bei Anwesenheit mindestens eines wärmeverformbaren Polymers in einem zweidimensionalen Flächenabschnitt oder einer Kombination der vorstehend genannten Formgebungsverfahren; und
VII) Fixieren des dreidimensionalen Objektes durch Verschweißen, Kleben, Klammern, Tackern, Nageln, Nieten, Nähen, Stecken, Kletten, Schnappverbindungen oder einer Kombination daraus mindestens einer Teilfläche des dreidimensionalen Objekts mit mindestens einer weiteren Teilfläche des dreidimensionalen Gegenstandes.

Eine bevorzugte Ausführungsform bezieht sich auf ein Verfahren, wobei das schichtaufbauende Formgebungsverfahren Schmelzschichtung (Fused Filament Fabrication (FFF), Ink-Jet-Printing oder Photopolymer-Jetting) ist.

Eine weitere bevorzugte Ausführungsform bezieht sich auf ein Verfahren, wobei in allen Schichten dasselbe härtbare Polymer oder aushärtbare Reaktionsharz verwendet wird.

Eine weitere bevorzugte Ausführungsform bezieht sich auf ein Verfahren, wobei mindestens eine Schicht ein anderes härtbares Polymer oder aushärtbares Reaktionsharz umfasst.

Eine weitere bevorzugte Ausführungsform bezieht sich auf ein Verfahren, wobei mindestens ein härtbares Polymer oder aushärtbares Reaktionsharz zum Auftragen einer Schicht in Form einer fließfähigen und aushärtbaren Stoffmischung verwendet wird.

Eine weitere bevorzugte Ausführungsform bezieht sich auf ein Verfahren, wobei mindestens ein aushärtbares Polymer oder aushärtbares Reaktionsharz zum Auftragen einer Schicht in Form mindestens zweier verschiedener fließfähigen und aushärtbaren Stoffmischungen verwendet wird.

Eine weitere bevorzugte Ausführungsform bezieht sich auf ein Verfahren wobei mindestens ein aushärtbares Polymer oder aushärtbares Reaktionsharz zum Auftragen einer Schicht in Form einer fließfähigen und aushärtbaren Stoffmischung verwendet wird bzw. wobei mindestens ein aushärtbares Polymer oder aushärtbares Reaktionsharz zum Auftragen einer Schicht in Form mindestens zweier verschiedener fließfähigen und aushärtbaren Stoffmischungen verwendet wird, wobei die Stoffmischungen mindestens einen Füllstoff ausgewählt aus der Gruppe bestehend aus Verstärkungsfasern ausgewählt aus Polyamidfasern, Glasfasern, Kohlenstofffasern oder Aramidfasern oder Verstärkungspartikel, ausgewählt aus anorganischen oder keramischen Nanopulvern, Metallpulvern oder Kunststoffpulvern oder Ruß und organische und anorganische Pigmente enthalten.

Eine weitere bevorzugte Ausführungsform bezieht sich auf ein Verfahren, wobei das Polymer in einer fließfähigen und aushärtbaren Stoffmischung zur Erstellung mindestens einer Schicht ausgewählt ist aus Silikon, PVC und EVA, PE, PU und TPE bevorzugte TPEs sind TPU oder TPV.

Eine weitere bevorzugte Ausführungsform bezieht sich auf ein Verfahren, wobei die Aushärtung durch Abkühlen von Thermoplasten, durch Kalt- oder Heißpolymerisation, Polyaddition, Polykondensation, Addition oder Kondensation oder durch elektro-magnetische Strahlungen oder Wärme initiierte Polymerisation erfolgt.

Eine weitere bevorzugte Ausführungsform bezieht sich auf ein Verfahren, wobei die Aushärtung durch eine unmittelbar an der Spritzdüse nachgeführten UV- oder IR-Lichtquelle durchgeführt wird.

Erfindungsgemäss erfolgt das Formen durch Biegen des zweidimensionalen Flächenabschnitts, Falten des zweidimensionalen Flächenabschnitts, Formgebung durch Auflegen des zweidimensionalen Flächenabschnitts auf einen Leisten, Thermoformen bei Anwesenheit mindestens eines warmverformbaren Polymers in einem zweidimensionalen Flächenabschnitt.

Erfindungsgemäss erfolgt die Fixierung durch Verschweißen, Kleben, Klammern, Tackern, Nageln, Nieten, Nähen, Stecken, Kletten, Schnappverbindungen oder einer Kombination daraus mindestens einer Teilfläche des erfindungsgemäßen dreidimensionalen Gegenstandes mit mindestens einer weiteren Teilfläche des erfindungsgemäßen dreidimensionalen Gegenstandes.

Eine weitere bevorzugte Ausführungsform bezieht sich auf ein Verfahren, wobei das dreidimensionale Objekt ein Schuhoberteil ist.

Bevorzugt werden weitere Materialien, beispielsweise in Form einer Zwischenlage wie ein Textil oder eine Folie auf eine der in Schritt I., II. oder III. aufgebrachten Schichten aufgebracht. Das Textil kann beispielsweise in Form eines Geleges oder in Form von Fasern vorliegen. Des Weiteren ist es bevorzugt mindestens ein weiteres Element in den Flächenabschnitt zu integrieren. Das Integrieren des mindestens einen weiteren Elements wird bevorzugt durch Einbringen zwischen zwei Schichten, gebildet in Schritt I., II. oder III. vorgenommen. Alternativ oder zusätzlich kann das mindestens eine weitere Element auf den Flächenabschnitt während oder nach seiner Fertigung sich über mehrere Schichten erstreckend angeordnet sein. Bevorzugt ist das weitere Element ausgewählt aus der Gruppe bestehend aus einem Elektronikbauteil, einem dekorativen Element, einem saugfähigen Element oder einer Kombination aus mindestens zwei hieraus. Beispiele für ein Elektronikbauteil sind RFID Tags, Antennen, Druck-, Beschleunigungs-, Temperatur-Sensoren oder Kombinationen von mindestens zwei hiervon. Beispiele eines dekorativen Elements sind farbig gedruckte Textilien, Hologramme, Metallplaketten oder Kombinationen aus mindestens zwei hiervon. Beispiele für ein saugfähiges Element sind Kunststoffschäume wie Polyurethan- oder Kautschukschäume oder andere flüssigkeitsabsorbierende, also saugfähige Polymere wie Polyacrylsäure oder Polyacrylamide. Bevorzugt werden Poren oder Lücken, die im Folgenden bezüglich der Verfahren zu den ersten drei Aspekten beschrieben werden durch zusätzliches Material aufgefüllt. Das Auffüllen kann mit einem oder mehreren gleichen oder einem oder mehreren anderen Verfahren erfolgen wie für die Erstellung des Flächenabschnitts beschrieben. Bevorzugt erfolgt das Auffüllen der Poren oder Lücken mittels des gleichen Verfahrens, wie das in Schritt I), i) bzw. I. gewählte Verfahren. Weiterhin bevorzugt erfolgt das Auffüllen der Poren oder Lücken mittels des gleichen Verfahrens und Materials mit dem die Schicht aufgebaut wurde, die die Pore oder Lücke umgibt.

Weiterhin bevorzugt können zusätzliche Schichten eines zusätzlichen Materials vor oder nach dem Formen aufgebracht werden. Als Material für die zusätzlichen Schichten kommen alle Materialien in Frage, die der Fachmann hierfür für geeignet hält. Bevorzugt handelt es sich bei den Materialien um Polymere, insbesondere um aushärtbare Polymere oder aushärtbare Reaktionsharze. Weiterhin bevorzugt handelt es sich um aushärtbare Polymere oder aushärtbare Reaktionsharze, wie sie für die erste Schicht des ersten Aspekts der Erfindung beschrieben werden.

Der unbestimmte Ausdruck "ein" steht im Allgemeinen für "wenigstens ein" im Sinne von "ein oder mehr". Der Fachmann versteht je nach Situation, dass nicht der unbestimmte Artikel sondern der bestimmte Artikel "ein" im Sinne von "1" gemeint sein muss bzw. der unbestimmte Artikel "ein" auch in einer Ausführungsform den bestimmten Artikel "ein" (1) mit umfasst.

Alle hierin beschriebenen bevorzugten Ausführungsformen sind miteinander kombinierbar, solange sie nicht geltenden Naturgesetzten widersprechen.

### 3D-Druckverfahren

Der Begriff "additive Fertigung" ist dem Fachmann bekannt und ist der Überbegriff über verschiedene Verfahren zur schnellen Herstellung von Musterbauteilen ausgehend von Konstruktionsdaten.

Der Begriff "schichtaufbauendes Formgebungsverfahren mittels fließfähige/ fließfähiger und aushärtbarer Stoffmischungen", wie hierin verwendet, bezieht sich bevorzugt auf FFF, es kann sich jedoch auch auf jedes andere bekannte 3D-Druckverfahren mittels fließfähiger und aushärtbarer Stoffmischungen beziehen wie z. B. Photopolymer-Jetting (http://www.custompartnet.com/wu/jettedphotopolymer; Stand 08.04.2015) oder Ink-Jet-Printing Verfahren (http://www.custompartnet.com/wu/ink-jet-printing; Stand 08.04.2015).

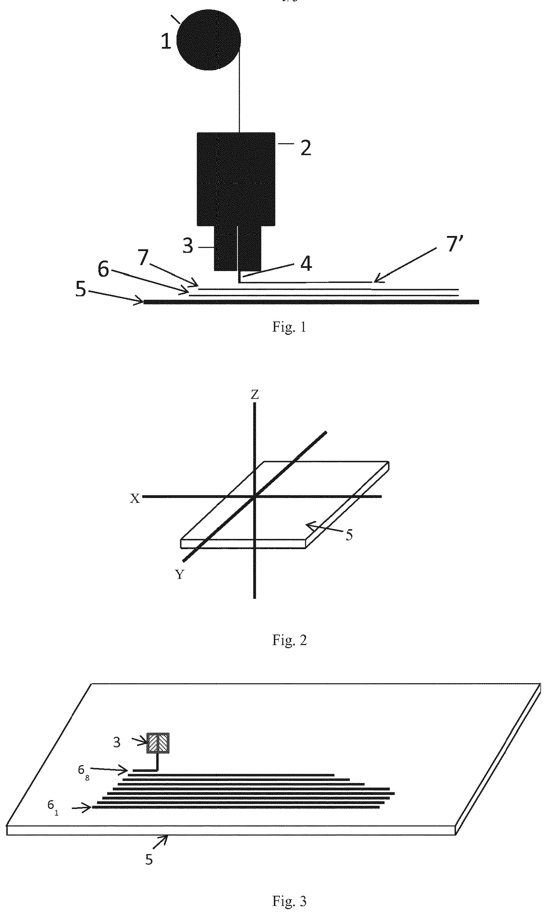

Der Begriff "Fused Filament Fabrication" (FFF; deutsch: Schmelzschichtung, manchmal auch Plastic Jet Printing (PJP) genannt), wie hierin verwendet, bezeichnet ein Fertigungsverfahren aus dem Bereich der additiven Fertigung, mit dem ein Werkstück schichtweise aus einem schmelzfähigen Kunststoff aufgebaut wird. Ein schematischer Aufbau für ein FFF-Verfahren ist in Fig. 1 gezeigt. Der Kunststoff kann mit oder ohne weitere Zusätze wie Fasern eingesetzt werden. Maschinen für das FDM gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 60 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm. Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht.

Die Düse ist dabei bevorzugt so ausgestaltet, dass Materialmengen entweder kontinuierlich abgegeben werden können oder in Tropfenform.

In dem vorliegenden erfindungsgemäßen Verfahren wird die Düse bevorzugt bei dem 3D-Druckverfahren in einem Abstand über die plane Basisplatte (wenn die erste Schicht aufgetragen wird) bzw. über bereits aufgetragene Schichten gefahren, der dem 0,3-fachen bis 1-fachen bevorzugt dem 0,3-fachen bis 0,9-fachen wie z. B. dem 0,3-fachen bis 0,8-fachen, 0,4-fachen bis 0,8-fachen oder 0,5-fachen bis 0,8-fachen, bezogen auf den Durchmesser des aufzutragenden Materialfadens (Düsenauslassdurchmesser) entspricht. Diese Korrelation zwischen Untergrundabstand der Düse (Untergrund ist entweder die plane Basisplatte oder eine bereits aufgetragene Schicht) und Düsenauslassdurchmesser sorgt dafür, dass das Material mit einem gewissen Andruck auf den Untergrund gepresst wird und so eine bessere Haftung zwischen den Schichten des entstehenden Flächenabschnitts erzeugt wird.

Die Stoffmischungen, die in dem erfindungsgemäßen Verfahren eingesetzt werden, werden kurz vor der Düse oder in der Düse auf mindestens 60 °C (ab dieser Temperatur können z. B. dem Fachmann bekannte Klebstoffe fließfähig gemacht werden) aufgeheizt fließfähig. Andere Stoffe, wie etwa Thermoplasten (z. B. Polycarbonat (PC)) benötigen Temperaturen bis 300 °C um fließfähig zu werden. Der Fachmann kennt die Temperaturbereiche zum Fließfähigmachen bekannter thermoplastischer Polymere. Bevorzugt liegt die Aufheiztemperatur der verflüssigten Stoffmischungen, die auch die Austrittstemperatur der Stoffmischungen aus der Düse darstellt (Düsenaustrittstemperatur), im Bereich von 100 °C bis 300 °C, mehr bevorzugt im Bereich von 150 °C bis 260 °C.

Eine verflüssigte Stoffmischung wird in einem erfindungsgemäßen Verfahren durch die Düse als Materialbahn zur Erstellung einer ersten Schicht, die aus einzelnen, parallel zueinander verlaufenden Materialbahnen besteht, zu einer zusammenhängenden Fläche aus miteinander verbundenen Materialbahnen besteht oder aus durch Materialbahnen gebildeten wabenförmig oder anderen, geometrischen Figuren besteht auf die plane Basisplatte aufgetragen. Dabei ist die Viskosität der Stoffmischung nach Verlassen der Düse als Materialbahn derart hoch, dass ein völliges Zerlaufen der entstehenden Bahn nicht stattfindet. Dem Fachmann ist bekannt, welche Viskositäten/Bahndurchmesser bei einem Verfahren wie FFF, Jetted-Photopolymerauf oder Ink-Jet-Printing vorliegen müssen.

Wie bereits an anderer Stelle beschrieben, ist es bevorzugt, dass die Materialbahn in Form von Tropfen auf die Basisplatte oder eine zuvor aufgebrachte Schicht aufgebracht wird. Insbesondere geeignete Verfahren zum Auftragen des Polymers oder Reaktionsharzes sind das Jetted- Photopolymer oder Ink-Jet-Printing.

Durch das Verhältnis Abstand Düse zu Untergrund und Fadendurchmesser (Düsenauslassdurchmesser) kann durch das Abflachen (und damit Verbreitern) des aus der Düse austretenden Materialstroms so entweder durch das Auftragen der Materialbahnen eine durchgehende Fläche entstehen oder Materialbahnen, die durch freie Flächen voneinander getrennt sind. Besteht die erste Schicht aus sich lateral nicht berührenden Materialbahnen und wird auf die erste Schicht im folgenden Schritt eine zweite Schicht auf die erste Schicht, so muss es Kontaktpunkte (z. B. Kreuzpunkte) bzw. Kontaktflächen zwischen den beiden Flächen geben, um ein Zusammenhaften der beiden Schichten zu gewährleisten. In diesem Fall wird in einem erfindungsgemäßen Verfahren die Fläche einer ersten Schicht durch die auf die erste Schicht aufgetragene zweite Schicht definiert. In einem Fall, in dem eine erste Schicht in Form zueinander paralleler Materialbahnen, und eine zweite Schicht auf die erste Schicht aufgetragen wurde, beträgt der Wert des Winkels der Auftragungsorientierung (Betrag der Auftragungsrichtung) der Materialbahnen der zweiten Schicht entweder ≠ 0° bezogen auf die Auftragungsorientierung der Materialbahnen der ersten Schicht (wodurch durch die beiden Schichten Poren gebildet werden können), oder die Auftragungsorientierung der Materialbahnen der zweiten Schicht ist identisch mit der Auftragungsorientierung der Materialbahnen der ersten Schicht, jedoch sind die Materialbahnen der zweiten Schicht um ca. einen halben Abstand, bevorzugt einen halben Abstand, bezogen auf den Abstand zwischen den Materialbahnenmittelpunkten benachbarter Materialbahnen der ersten Schicht versetzt. Dabei muss jede Bahn der zweiten Schicht mindestens so breit sein, dass sie die jeweils unter ihr liegenden zwei Bahnen der ersten Schicht berührt. Das Versetzen der Materialbahnen sorgt durch das Verbinden der beiden Schichten miteinander für eine durchgehende Verbindung (keine Porenbildung).

Bevorzugt haben durch zwei Schichten gebildete Poren eine Größe vom 0,3-fachen bis zum 1000-fachen der maximalen Bahndicke zweier die Pore bildenden Schichten. In einer bevorzugten Ausführungsform beträgt die Größe einer Pore das 0,3-fache bis 5-fache der maximaler Bahndicke zweier die Pore bildenden Schichten.

In einer bevorzugten Ausführungsform wird in einem erfindungsgemäßen Verfahren der Abstand der Düse z. B. bei einem FFF-Verfahren, vom Untergrund (plane Basisplatte, Zwischenlage oder zuvor gedruckte Schicht) und der Abstand der Materialbahnen voneinander bei der Bildung einer (neuen) Schicht derart gewählt, dass es zu keiner Flächenbildung bei der Bildung einer (neuen) Schicht kommt sondern sich alle Schichten des Flächenabschnitts aus parallelen Materialbahnen zusammensetzten. Der Winkel der Auftragungsorientierung der Materialbahnen, die eine Schicht bilden ist dabei bei zwei aufeinanderfolgenden Schichten ≠ 0° bezogen auf die Auftragungsorientierung der ersten der beiden Schichten. Bevorzugt liegt der Winkel der Auftragungsorientierung bei mindestens zwei aufeinanderfolgenden Schichten im Bereich von 30° bis 150°, wie etwa im Bereich von 45° bis 135° oder im Bereich von 60° bis 120° oder im Bereich von 85° bis 95° oder 90°. Der Fachmann versteht, dass es zu Schwankungen von bis zu ± 5° bei der Auftragsrichtung der Materialbahnen einer zweiten Schicht auf eine erste Schicht kommen kann, da durch die zueinander parallelen Materialbahnen der Untergrundschicht die Oberfläche des Untergrundes für die zweite Schicht naturgegeben lokal uneben ist.

### Plane Basisplatte

Plane Basisplatten für additive Fertigungsverfahren sind dem Fachmann bekannt. Eine plane Basisplatte kann mittels konventionellen oder generativen Technik hergestellt, z. B. kann eine Basisplatte gefräst werden und bietet die Vorteile der Einhaltung von Maß- und Formgenauigkeit sowie einer sehr guten Oberflächenqualität. Es stehen viele verschiedene Materialien für das Fräsen zur Verfügung, wie beispielsweise Ureol, Holz oder Aluminium. Für bestimmte Geometrie kann es sinnvoll sein, die Abformgrundlage generativ herzustellen, zum Beispiel mittels Lasersintern.

Eine plane Basisplatte dient der Flächenformgebung des Flächenabschnitts, der in einem erfindungsgemäßen Verfahren hergestellt wird. Entsprechend kann eine erste Schicht in einem erfindungsgemäßen Verfahren direkt auf eine plane Basisplatte aufgetragen werden oder es kann eine Zwischenlage wie ein Textil oder eine Folie, die die flächige Form der planen Basisplatte an die erste Schicht eines erfindungsgemäßen Verfahren Form weitergibt, vorliegen, auf der die erste Schicht aufgetragen wird und mit der sich die Materialbahnen der ersten Schicht verbinden, so dass diese Zwischenlage Teil des Flächenabschnitts und damit auch Teil des dreidimensionalen Objektes wird.

Die Oberfläche der planen Basisplatte besteht bevorzugt aus Glas, Carbon, Polypropylen, Edelstahl oder einer mit Teflon, Polyimid, etc. beschichteten Oberfläche oder aber wird gezielt mit einer haftenden Primer Schicht versehen, die ein Anhaften der zu druckenden Objekte auf der Oberfläche begünstigt, dadurch ein Verziehen der gewünschten zu druckenden Objekte minimiert. Die Haftschicht ist dabei typischerweise eine niedrigschmelzende Verbindung die eventuell in einem geeigneten Lösungsmittel vorgelöst werden kann. Verschiedenste Haftvermittler sind dem Fachmann bekannt.

Bei einer "planen Basisplatte" im Sinne der vorliegenden Erfindung handelt es sich um eine in der Arbeitsebene essentiell plane Unterlage auf der die erste Schicht eines Flächenabschnitts in einem erfindungsgemäßen Herstellungsprozess aufgetragen wird. Essentiell plan bedeutet, dass eine Unterlage in einer XY-Ebene eines kartesischen Koordinatensystems mit drei Achsen X, Y und Z aufgespannt ist (Z wäre dann = 0) und keine bzw. materialbedingt nur geringe Abweichungen auf der Z-Achse aufweist (siehe z. B. Fig. 2). Die Abweichungen in Z-Richtung für eine Ebene, die in XY-Richtung definiert wurde, liegen bevorzugt bei maximal 3 mm mehr bevorzugt bei maximal 1 mm, noch mehr bevorzugt jedoch sind die Abweichungen in Z-Richtung der Oberfläche maximal das 2-fache der maximalen Schichtauftragsdicke einer ersten Schicht (jedoch maximal 3 mm, bevorzugt maximal 1 mm), besonders bevorzugt sind die Abweichungen in Z-Richtung der Oberfläche kleiner als die maximale Schichtauftragsdicke einer ersten Schicht, wobei die plane Basisplatte in ihren orthogonalen Ausdehnungen in einer gedachten XY-Ebene jeweils mindestens um einen Faktor 5, besser um einen Faktor 10, bevorzugt um einen Faktor 50, mehr bevorzugt um einen Faktor 100 größer ist als die maximale Abweichung in der Z-Ebene. Beispielhaft besitzt bei einem Höhenunterschied von 2 mm eine runde, plane Basisplatte einen Durchmesser von mindestens 1 cm, einen Durchmesser von mindestens 2 cm, einen Durchmesser von mindestens 100 cm oder einen Durchmesser von mindestens 200 cm; handelt es sich um eine quadratische, plane Basisplatte so besitzen die Kanten, die die Basisplatte bilden jeweils mindestens eine Länge von 1 cm, 2 cm, 100 cm oder 200 cm.

Die Form einer planen Basisplatte ist irrelevant solange die Basisplatte eine plane Fläche aufweist, die als Untergrund für eine erste Schicht eines Flächenabschnitts dient und in all ihren X- und Y-Ausrichtungen größer ist als oder gleich groß wie die Fläche der ersten Schicht eines zweidimensionalen Flächenabschnitts gemäß der vorliegenden Erfindung. Die Form der Basisplatte kann symmetrisch z. B: rund, rechteckig, quadratisch etc. oder asymmetrisch sein.

In einer bevorzugten Ausführungsform ist die plane Basisplatte beheizbar, um eine vorzeitige Aushärtung des Materials durch temperaturbedingtes Erstarren der ersten Schicht hinauszuzögern. Die Heiztemperatur der Basisplatte liegt bevorzugt in einem Bereich von 30 °C bis 180 °C wie etwa in einem Bereich von 40 °C bis 140 °C oder 60 °C bis 100 °C. Die Aufwärmtemperatur der planen Basisplatte sollte jedoch nicht größer als die in einem erfindungsgemäßen Verfahren für eine zum fließfähig machen der fließfähigen und aushärtbaren Stoffmischung verwendete Düsenaustrittstemperatur sein. Bevorzugt liegt die Aufwärmtemperatur mindestens 10 °C unter der Düsenaustrittstemperatur.

Die Beheizung der planen Basisplatte wird bevorzugt zumindest so lange durchgeführt, bis nach Abschluss der Auftragung der ersten Schicht des Flächenabschnitts mindestens eine zweite Schicht auf die erste Schicht aufgetragen wurde.

### Stoffmischungen

Ein aushärtbares Polymer oder aushärtbares Reaktivharz im Sinn der vorliegenden Erfindung kann alleine oder in Form von "fließfähige und aushärtbare Stoffmischungen" in einem erfindungsgemäßen Verfahren eingesetzt werden. Der Begriff "fließfähige und aushärtbare Stoffmischungen" bezieht sich auf eine Stoffmischung umfassend mindestens ein aushärtbares Polymer oder mindestens ein aushärtbares Reaktionsharz und mindestens einen Zusatzstoff wie z. B. Fasern, UV-Härter, Peroxide, Diazoverbindungen, Schwefel, Stabilisatoren, anorganische Füllstoffe, Weichmacher, Flammschutzmittel und Anti-Oxidantien. Insbesondere bei Reaktionsharzen können Mischungen von zwei oder mehr Reaktionsharzen vorab gemischt sein oder werden auf dem Substrat vermischt. Der Auftrag kann im letzteren Fall beispielsweise aus unterschiedlichen Düsen erfolgen. Die fließfähigen und aushärtbaren Stoffmischungen können unterschiedlicher Natur sein, müssen jedoch unter den Bedingungen des erfindungsgemäßen Verfahrens flüssige beziehungsweise zähflüssige extrudierbare oder flüssige verdruckbare Kunststoffmassen sein. Dabei kann es sich um Thermoplasten, Silikone, unvulkanisiertes Gummi oder auch um aushärtbare Reaktionsharze handeln.

Thermoplasten können z. B. Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polyurethan (PU), Polystyrol (PS), Polyetheretherketon (PEEK), Polyvinylchlorid (PVC), Zelluloid und thermoplastischen Elastomeren (TPE) wie TPO (Thermoplastische Elastomere auf Olefmbasis, vorwiegend PP/EPDM, z. B. Santoprene (AES/Monsanto)), TPV (Vernetzte thermoplastische Elastomere auf Olefinbasis, vorwiegend PP/EPDM, z. B. Sarlink (DSM), Forprene (SoFter)), TPU (Thermoplastische Elastomere auf Urethanbasis (thermoplastische Urethane), z. B. Desmopan, Texin, Utechllan (Bayer)), TPC (Thermoplastische Polyesterelastomere / Thermoplastische Copolyester, z. B. Keyflex (LG Chem)), TPS( Styrol-Blockcopolymere (SBS, SEBS, SEPS, SEEPS und MBS), z. B. Styroflex (BASF), Septon (Kuraray), Thermolast (Kraiburg TPE) oder Saxomer (Polyplast Compound Werk GmbH)) sein.

Die fließfähigen und aushärtbaren Stoffmischungen bzw. aushärtbaren Polymere oder aushärtbaren Reaktivharze in einem erfindungsgemäßen Verfahren können Polymere und/oder polymerisierbare Oligomere bzw. Monomere mit oder ohne Zusatzstoffe wie z. B. Polyamid-, Kevlar-, Glas-, Aramid- oder Kohle-Fasern Rayon, Celluloseacetat, und/oder gängige Naturfasern (z. B. Flachs, Hanf, Cocos, etc.) sein. Neben oder anstatt von Fasern können die Stoffmischungen auch Verstärkungspartikel, insbesondere ausgewählt aus anorganischen oder keramischen Nanopulvern, Metallpulvern oder Kunststoffpulvern, beispielsweise aus SiO₂ oder Al₂O₃, AlOH₃, Ruß, TiO₂ oder CaCO₃ enthalten. Weiterhin können Stoffmischungen z. B. Peroxide, Diazoverbindungen und/oder Schwefel enthalten.

Bevorzugte aushärtbare Polymer oder aushärtbare Reaktivharze oder fließfähige und aushärtbare Stoffmischungen umfassend ein aushärtbares Polymer oder aushärtbares Reaktivharz, die in einem erfindungsgemäßen Verfahren eingesetzt werden, bestehen aus/umfassend Elastomere.

Insbesondere bevorzugt sind Stoffmischungen in einem erfindungsgemäßen Verfahren umfassend/bestehend aus PVC, EVA, PE, PU, elastifiziertes PVC, Gummi, Silikon oder TPE (insbesondere TPU oder TPV).

In einer besonders bevorzugten Ausführungsform werden in einem erfindungsgemäßen Verfahren PE, PU oder TPE (insbesondere TPU oder TPV) als fließfähige und aushärtbare Stoffmischungen oder aushärtbare Polymere eingesetzt. In einer weiteren bevorzugten Ausführungsform enthalten derartige fließfähige und aushärtbare Stoffmischungen aus PE, PU oder TPE (insbesondere TPU oder TPV) zusätzlich Fasern und/oder Verstärkungspartikel, wobei sowohl Kurzfasern < 2 mm und Langfasern > 2 mm möglich sind. Auch können "Endlosfasern" verwendet werden, die über die gesamte Länge einer aufgetragenen Materialbahn gehen. Die Anwesenheit von Fasern führt bei der Extrusion der fließfähigen und aushärtbaren Stoffmischung in einem erfindungsgemäßen Verfahren zu einer anisotropen Verstärkung der sich bildenden Linien aus der fließfähigen und aushärtbaren Stoffmischung, ohne dabei die Biegefähigkeit in Längsrichtung der Materialbahnen nennenswert zu beeinflussen. Fasermengen werden bevorzugt mit bis zu 40 Gew.-% bezogen auf den extrudierten Kunststoff zugegeben. Typischerweise vergrößert sich der E-Modul mit Zugabe der Fasern um einen Faktor > 1,5 besonders bevorzugt > 2.

In einer weiteren bevorzugten Ausführungsform werden in einem erfindungsgemäßen Verfahren aushärtbare Reaktionsharze eingesetzt oder fließfähige und aushärtbare Stoffmischungen umfassend aushärtbare Reaktionsharze eingesetzt, die z.B. UV aktiviert aushärten oder eine chemische Reaktion untereinander oder der Luft eingehen. Beispiele hierfür sind Zweikomponentenpolyurethane (2K PU), Zweikomponentensilikone (2K Silikone), feuchtigkeitshärtende Silikone oder PU-Systeme, lufthärtende oder radikalisch härtende ungesättigte Polyester oder Gummimaterialien als auch alle dem Fachmann bekannten UV-härtenden Reaktivharze auf Basis von z.B. Vinyl- und Acrylverbindungen und auch Kombinationen verschiedener Härtungsmechanismen.

E-Modul-Angaben zu Polymeren und Reaktivharzen wie hierin verwendet beziehen sich, wenn nicht explizit anders angegeben, auf den E-Modul der Polymere bzw. Reaktivharze im kristallinen (ausgehärtetem) Zustand und nicht auf den E-Modul eines Polymers oder Reaktivharz unter Extrusionsbedingungen einer fließfähigen und aushärtbaren Stoffmischung.

Der E-Modul wird vorliegend gemäß DIN 53504 (Stand 18.04.2015) bestimmt.

In einer weiteren bevorzugten Ausführungsform beträgt der E-Modul eines Polymers, bevorzugt eines thermoplastischen Polymers, zur Erstellung einer ersten Schicht in einem erfindungsgemäßen Verfahren ggf. in einer fließfähigen und aushärtbaren Stoffmischung (wie z. B. PE, PU oder TPE (insbesondere TPU oder TPV, optional jeweils mit Fasern versetzt) weniger als 250 Megapascal (MPa), bevorzugt weniger als 200 MPa, mehr bevorzugt weniger als 150 MPa, noch mehr bevorzugt weniger als 100 MPa wie z. B. einen E-Modul im Bereich von 1 bis 100 MPa oder einen E-Modul im Bereich von 5 bis 50 MPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Polymers beträgt jedoch nicht mehr als 250 MPa.

In einer bevorzugten Ausführungsform beträgt der E-Modul eines weiteren Kunststoffes zur Erstellung mindestens einer weiteren Schicht in einem erfindungsgemäßen Verfahren ggf. in einer fließfähigen und aushärtbaren Stoffmischung (wie z. B. PE, PU oder TPE (insbesondere TPU oder TPV, optional jeweils mit Fasern versetzt) weniger als 250 Megapascal (MPa), bevorzugt weniger als 200 MPa, mehr bevorzugt weniger als 150 MPa, noch mehr bevorzugt weniger als 100 MPa wie z. B. einen E-Modul im Bereich von 1 bis 100 MPa oder einen E-Modul im Bereich von 5 bis 50 MPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Polymers beträgt jedoch nicht mehr als 250 MPa.

In einer weiteren bevorzugten Ausführungsform beträgt der E-Modul aller Kunststoffe zur Erstellung einer Schicht in einem erfindungsgemäßen Verfahren ggf. in einer fließfähigen und aushärtbaren Stoffmischung (wie z. B. PE, PU oder TPE (insbesondere TPU oder TPV, optional jeweils mit Fasern versetzt) weniger als 250 Megapascal (MPa), bevorzugt weniger als 200 MPa, mehr bevorzugt weniger als 150 MPa, noch mehr bevorzugt weniger als 100 MPa wie z. B. einen E-Modul im Bereich von 1 bis 100 MPa oder einen E-Modul im Bereich von 5 bis 50 MPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Polymers beträgt jedoch nicht mehr als 250 MPa.

In einer weiteren bevorzugten möglichen Ausführungsform beträgt der E-Modul von einer, insbesondere mindestens zwei zusammenhängenden Schichten weniger als 250 Megapascal (MPa), bevorzugt weniger als 200 MPa, mehr bevorzugt weniger als 150 MPa, noch mehr bevorzugt weniger als 100 MPa wie z. B. einen E-Modul im Bereich von 1 bis 100 MPa oder einen E-Modul im Bereich von 5 bis 50 MPa. Dabei dürfen einzelne Kunststoff-Filamente aus denen die Schicht(en) zusammengesetzt ist bzw. sind auch einen deutlich höheren E-Modul aufweisen.

In einer weiteren bevorzugten Ausführungsform beträgt der E-Modul eines Polymers, bevorzugt eines Reaktivharzes zur Erstellung einer ersten Schicht in einem erfindungsgemäßen Verfahren ggf. in einer fließfähigen und aushärtbaren Stoffmischung (z. B. 2K PU, 2K Silikone, feuchtigkeitshärtende Silikone oder PU-Systeme, lufthärtende oder radikalisch härtende ungesättigte Polyester oder Gummimaterialien, UV-härtenden Reaktivharze auf Basis von z.B. Vinyl- und Acrylverbindungen) weniger als 250 Megapascal (MPa), bevorzugt weniger als 200 MPa, mehr bevorzugt weniger als 150 MPa, noch mehr bevorzugt weniger als 100 MPa wie z. B. einen E-Modul im Bereich von 1 bis 100 MPa oder einen E-Modul im Bereich von 5 bis 50 MPa. Das E-Modul dieser (unter den Extrusionsverfahrensbedingungen) fließfähigen und aushärtbaren Stoffmischungen kann z. B. durch den Einsatz von Fasern höher liegen, der E-Modul des eingesetzten Reaktivharze beträgt jedoch nicht mehr als 250 MPa.

In einer bevorzugten Ausführungsform beträgt der E-Modul eines weiteren Kunststoffes zur Erstellung mindestens einer weiteren Schicht in einem erfindungsgemäßen Verfahren ggf. in einer fließfähigen und aushärtbaren Stoffmischung (z. B. 2K PU, 2K Silikone, feuchtigkeitshärtende Silikone oder PU-Systeme, lufthärtende oder radikalisch härtende ungesättigte Polyester oder Gummimaterialien, UV-härtenden Reaktivharze auf Basis von z.B. Vinyl- und Acrylverbindungen) weniger als 250 Megapascal (MPa), bevorzugt weniger als 200 MPa, mehr bevorzugt weniger als 150 MPa, noch mehr bevorzugt weniger als 100 MPa wie z. B. einen E-Modul im Bereich von 1 bis 100 MPa oder einen E-Modul im Bereich von 5 bis 50 MPa. Das E-Modul dieser (unter den Extrusionsverfahrensbedingungen) fließ fähigen und aushärtbaren Stoffmischungen kann z. B. durch den Einsatz von Fasern höher liegen, der E-Modul des eingesetzten Reaktivharzes beträgt jedoch nicht mehr als 250 MPa.

In einer weiteren Ausführungsform beträgt der E-Modul eines weiteren Kunststoffes zur Erstellung mindestens einer weiteren Schicht in einer fließfähige und aushärtbare Stoffmischungen (wie z. B. PA oder PLA, optional kann die Stoffmischung jeweils mit Fasern versetzt) mehr als 500 Megapascal (MPa), wie z. B. mehr als 1000 Gigapascal (GPa), wie z. B. in einem Bereich von 1 GPa bis 3 GPa, oder in einem Bereich von 1 GPa bis 2,5 GPa. Der E-Modul dieser (unter den Extrusionsverfahrensbedingungen) fließ fähigen und aushärtbaren Stoffmischungen kann z. B. durch den Einsatz von Fasern jedoch noch höher liegen. Ein E-Modul sollte jedoch nicht größer als 20 GPa sein, da ansonsten eine Extrudierung durch eine Düse oder ein Durchlauf durch einen Inkjet-Kopf nur noch sehr schwer durchführbar ist. In einer bevorzugten Ausführungsform besitzen solche Schichten aus Polymeren oder Reaktivharzen mit E-Modul-Werten über 250 MPa eine geringere flächige Ausdehnung als die Fläche der ersten Schicht, z. B. liegt die durch eine zweite oder folgende Schicht, die in einem erfindungsgemäßen Verfahren aufgetragen wird, gebildete flächenmäßige Ausbreitung in einem Bereich von 0,01 bis 90% wie etwa von 0,1 bis 80%, von 0,1 bis 70%, von 0,1 bis 60% bezogen auf die Fläche der ersten Schicht.

### Schichten

Zur Herstellung jeder Schicht gemäß einem erfindungsgemäßen additiven Fertigungsverfahren wird Material in Form von Materiabahnen gemäß geometrischen Daten Bahn für Bahn ablegt.

Das Material in Form von Materialbahnen wird bevorzugt in Form von Tropfen auf die Basisplatte oder eine der Schichten, die sich gegebenenfalls bereits auf der Basisplatte befinden, aufgebracht. Unter Tropfen im Sinne der Erfindung wird jede Materialmenge verstanden, deren maximale Ausdehnung in jede Raumrichtung nicht mehr als 1 mm, bevorzugt nicht mehr als 0,5 mm, oder bevorzugt nicht mehr als 0,1 mm beträgt. Bevorzugt liegt der mittlere Durchmesser der Tropfen in einem Bereich von 0,01 bis 1 mm, oder bevorzugt in einem Bereich von 0,05 bis 0,7 mm, oder bevorzugt in einem Bereich von 0,1 bis 0,5 mm. Unter mittlerem Durchmesser gemäß der Erfindung wird der Mittelwert, berechnet aus dem Durchmesser des Tropfens an der Stelle mit der größten Ausdehnung und dem Durchmesser des Tropfens an der Stelle mit der kleinsten Ausdehnung verstanden. Die Tropfen können dabei auf die gesamte Fläche der Basisplatte oder der vorherig aufgebrachten Schicht aufgebracht werden oder lediglich auf einen Teil der Fläche der Basisplatte oder vorherig aufgebrachten Schicht. Die Tropfen können eine Form aufweisen, ausgewählt aus der Gruppe bestehend aus kreisförmig, oval, eckig oder einer Kombination aus mindestens zwei hiervon. Bevorzugt wird mindestens eine Materialbahn, oder bevorzugt mindestens zwei Materialbahnen oder bevorzugt alle Materialbahnen zur Bildung des dreidimensionalen Objekts, in Form von Tropfen auf die Basisplatte oder eine zuvor aufgebrachte Schicht aufgebracht.

Je nach Viskosität, Größe der Tropfen und Abstand der Tropfen können die Tropfen zu einer Materialbahn zusammenfließen, die die gesamte Fläche der zu beschichtenden Oberfläche, wie Basisplatte oder bereits aufgebrachter Schicht, überdecken. Alternativ kann der Abstand zwischen den Tropfen so gewählt werden, dass von einander getrennte Materialbahnen in Form von Tropfen nur einen Teil der Basisplatte oder vorherig aufgebrachten Schicht überdecken. Bevorzugt überdeckt die Materialbahn die Basisplatte oder vorherig aufgebrachte Schicht zu einem Teil in einem Bereich von 20 bis 100 %, oder bevorzugt in einem Bereich von 30 bis 100 %, oder bevorzugt in einem Bereich von 50 bis 100 %, oder bevorzugt in einem Bereich von 80 bis 100 %, bezogen auf die Gesamtfläche der Basisplatte bzw. der Gesamtfläche der vorherig aufgebrachten Schicht. Auf diese Weise können dreidimensionale Objekte hergestellt werden, bei denen einzelne Schichten zu mehr als ihren zwei direkt benachbarten Schichten Kontakt haben kann.

Die Tropfen haben bevorzugt ein Volumen in einem Bereich von 1 pl bis 500 µl, oder bevorzugt in einem Bereich von 5 pl bis 400 µl, oder bevorzugt in einem Bereich von 10 pl bis 300 µl. Die Materialbahn, die bevorzugt aus Tropfen gebildet wird, weist bevorzugt eine Länge in einem Bereich von 0,1 mm bis 100 m, oder bevorzugt in einem Bereich von 0,5 mm bis 50 m, oder bevorzugt in einem Bereich von 1 mm bis 10 m auf. Die Dicke der Materialbahn nach Auftrag liegt bevorzugt in einem Bereich von 1 µm bis 1,25 mm, oder bevorzugt in einem Bereich von 5 µm bis 0,9 mm.

Neben den seit langer Zeit bekannten Depositionsverfahren, wie Inkjet, kann für das Auftragen von Material in Form von Materialbahnen beispielsweise das ARBURG Kunststoff-Freiformen (AKF) mittels des "freeformer" Geräts der Firma ARBURG GmbH + Co KG verwendet werden, bei dem auf Basis von 3D-CAD Daten kleinste Tropfen auf die gewünschte Oberfläche aufgebracht werden können.

Bei den erfindungsgemäßen Verfahren ist vorgesehen, dass gemäß Schritt I), i) beziehungsweise Schritt I. ein aushärtbares Polymer oder aushärtbares Reaktionsharz mit jeweils einem Elastizitätsmodul (E-Modul) im gehärteten Zustand von < 250 MPa in fließfähiger Form als Materialbahnen auf eine plane Basisplatte aufgebracht wird. Darunter wird verstanden, dass wenigstens 80 Gew.-%, insbesondere wenigstens 90 Gew.-%, bevorzugt wenigstens 95 Gew.-% und bis zu 100 Gew.-% der erzeugten Schicht aus ausgehärteten Polymeren und/oder Reaktionsharzen besteht, die in diesem Zustand einen E-Modul < 250 MPa besitzen. Hiervon sind selbstverständlich Ausgestaltungen erfasst, bei denen einzelne Fäden einer Schicht einen E-Modul von ≥ 250 MPa besitzen. Dies können beispielsweise Glasfäden, Quarzfäden, Kohlefasern oder andere anorganische Fasern sein oder Kunststofffasern mit einem E-Modul ≥ 250 MPa, wie beispielsweise Kevlar- oder Aramidfasern. Die Kunststofffasern können dabei entweder ebenfalls über das erfindungsgemäße Verfahren auf der planen Basisplatte erzeugt oder auch eingelegt werden, ohne sie zuvor aufzuschmelzen.

Die Schichtdicke einer Schicht eines dreidimensionalen Objektes hergestellt nach einem erfindungsgemäßen Verfahren liegt bevorzugt in einem Bereich von 0,025 mm bis 1,25 mm, mehr bevorzugt in einem Bereich von 0,1 mm bis 0,9 mm.

Der Austrittsdurchmesser des Materialstrahls von der Düse (= Düsenauslassdurchmesser) liegt in erfindungsgemäßen Verfahren bevorzugt im Bereich von 0,025 mm bis 1,4 mm. Er beträgt jedoch bevorzugt mindestens 0,03 mm. Bevorzugt liegt er in einem Bereich von 0,03 mm bis 1,3 mm, mehr bevorzugt in einem Bereich von 0,15 bis 1 mm. Durch einen geringeren Abstand zwischen Düse und Untergrund (plane Basisplatte, Zwischenlage, oder bereits aufgetragene Lage(n)) bezogen auf den Düsenauslassdurchmesser kommt es zu einer geringeren Dicke (Höhe) einer Lage. Das Material wird dadurch zu einem Strang mit ovalem Querschnitt gequetscht. Ohne an die Erklärung gebunden zu sein führt ein größerer Düsenauslassdurchmesser im Verhältnis zum Abstand der Düse vom Untergrund zu einer besseren Haftung der neu entstehenden Schicht auf dem jeweiligen Untergrund.

Bevorzugt wird die erste Schicht in einem erfindungsgemäßen Verfahren aus einem Polymer, noch bevorzugter ein thermoplastisches Polymer, hergestellt, das einen E-Modul von weniger als 250 MPa, mehr bevorzugt weniger als 200 MPa, noch mehr bevorzugt weniger als 150 MPa, besonders bevorzugt weniger als 100 MPa wie z. B. einen E-Modul im Bereich von 1 MPa bis 100 MPa oder einen E-Modul im Bereich von 5 bis 50 MPa.

Gemäß der vorliegenden Erfindung können unterschiedliche Schichten eines Flächenabschnitts aus unterschiedlichen Stoffmischungen hergestellt werden oder alle Schichten eines Flächenabschnitts können aus derselben Stoffmischung hergestellt werden. Darüber hinaus ist es auch möglich, dass eine Schicht aus unterschiedlichen Stoffmischungen besteht, bevorzugt ist jedoch das aushärtbare Polymer bzw. aushärtbare Reaktivharz in diesen unterschiedlichen Stoffmischungen jeweils das gleiche (z. B. kann eine Schicht aus PU-Mischungen mit verschiedenen Farbpigmenten bestehen).

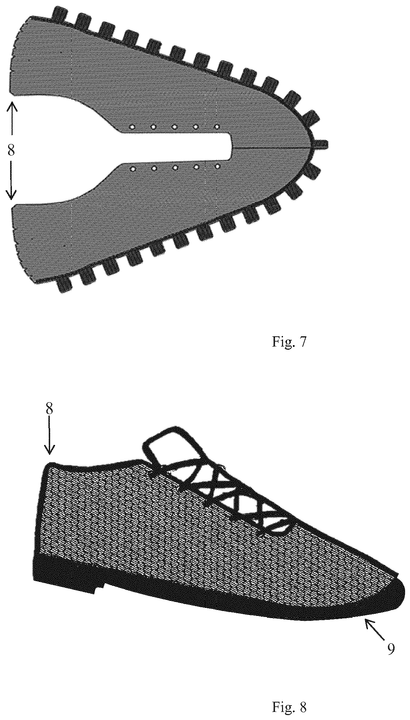

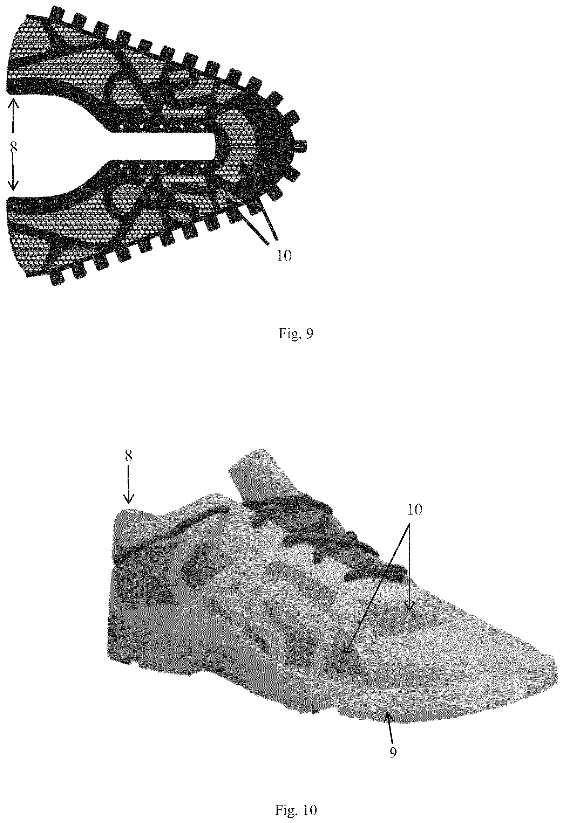

Unterschiedliche Schichten können unterschiedliche Formen aufweisen. Je nach Art des herzustellenden dreidimensionalen Gebildes dessen Außenfläche wenigstens einen Flächenabschnitt gemäß dem hierin beschriebenen Verfahren hergestellt umfasst, wird die Form des wenigstens einen Flächenabschnittes gewählt. Handelt es sich bei dem Flächenabschnitt z. B. um den Oberbereich eines Schuhs oder einem Teil eines Oberbereiches eines Schuhs wird der Fachmann entsprechend eine asymmetrische Form für den Flächenabschnitt wählen, die so gewählt ist, das nach Formen und Fixieren des Flächenabschnitts in ein 3-dimensionales Objekt dieses bereits die dreidimensionale Form eines Schuhoberbereichs aufweist. Als Beispiele sind als Fig. 7 und 9 zweidimensionale Flächenabschnitte gemäß der vorliegenden Erfindung schematisch dargestellt.

In einer bevorzugten Ausführungsform bestimmt die Ausdehnung der ersten Schicht in der Arbeitsebene die größte flächige Ausdehnung der Schichten des Flächenabschnitts aus dem ein dreidimensionales Objekt geformt wird.

In einer weiteren bevorzugten Ausführungsform stellt die erste Schicht in einem erfindungsgemäßen Verfahren flächenmäßig die größte Schicht in einem Flächenabschnitt dar bzw. keine der weiteren Schichten eines Flächenabschnitts, hergestellt gemäß dem hierin beschriebenen Verfahren, besitzt eine größere Fläche als die erste Schicht, besonders bevorzugt liegt, wenn man orthogonal auf die XY-Arbeitsebene in einem erfindungsgemäßen Verfahren schaut, keine der weiteren Schichten eines Flächenabschnitts in X- und/oder Y-Ausdehnung außerhalb der Fläche, die durch die erste Schicht auf der planen Basisplatte gebildet wird.

In einer weiteren bevorzugten Ausführungsform wird die erste Schicht auf einer planen Basisplatte geformt, bei der Betrag des Höhenunterschied der planen Basisplatte auf einer gedachten Z-Achse in einem eingeblendeten orthogonalen Koordinatensystem, wobei die plane Basisplatte in XY-Ebne definiert ist (siehe Fig. 2), bezogen auf die Fläche der ersten, aufgetragenen Schicht auf die planen Basisplatte maximal 5% , bevorzugt maximal 3%, mehr bevorzugt maximal 1% noch mehr bevorzugt maximal 0,5%, besonders bevorzugt maximal 0,1% ausmacht und wobei sowohl die maximalen, orthogonalen Ausdehnungen des Flächenabschnitts in der XY-Ebene mindestens einen Faktor 5, bevorzugt mindestens einen Faktor 10, mehr bevorzugt mindestens einen Faktor 25, noch mehr bevorzugt mindestens einen Faktor 50 wie z. B. mindestens einen Faktor 100 größer sind als der Höhenunterschied auf der relevanten Fläche der planen Basisplatte.

Wie bereits erläutert, setzt sich eine Schicht bei einem Verfahren im Sinne der Erfindung aus einzelnen Materialbahnen zusammen, die je nach Abstand voneinander und dem Verhältnis zwischen Düsenauslassdurchmesser und Abstand der Düse vom Untergrund auch in dem ausgehärteten Flächenabschnitt als einzelne Bahn(en) in der Schicht vorliegen oder durch Zusammenfließen eine flächige Schicht bilden, die gegebenenfalls Aussparungen aufweisen kann. Wie bereits erwähnt können die Materialbahnen aus tropfenförmig aufgebrachten Bereichen an Material auf der Basisplatte oder einer vorherig aufgebrachten Schicht bestehen.

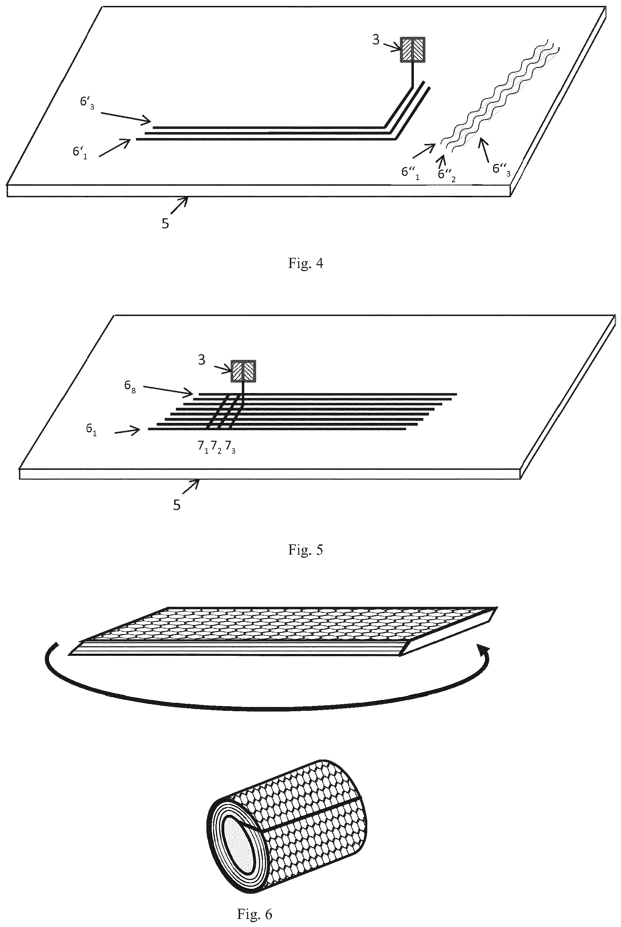

"Poren" im Sinne der vorliegenden Erfindung werden durch zwei Schichten gebildet, wobei beide Schichten Abstände der eine Schicht bildenden Materialbahnen aufweisen und der Auftragungswinkel der beiden Schichten zueinander ≠ 0° ist. "Aussparungen" im Sinne der vorliegenden Erfindung sind nicht mit Material der Schicht bedeckte Flächen innerhalb einer Schicht, die durch sich zeitweise räumlich trennende Materialbahnen, die jedoch mindestens 2 Berührungspunkte miteinander aufweisen bzw. durch eine sich selbst in Auftragungsrichtung erneut berührende/schneidende Materialbahn (z. B. Kreis) erzeugt werden (z. B. Hexagonalgitter in Fig. 6, 9 oder 10). "Lücken" im Sinne der vorliegenden Erfindung sind Unterbrechungen auf einer Schicht, bei denen sich Flächen einer Ebene nicht berühren und der Abstand zwischen diesen Flächen einer Schicht mindestens 5 Materialbahndicken beträgt.

Werden die Materialbahnen in Form von Tropfen aufgebracht, so kann durch die Variation des Abstandes der Tropfen zueinander oder durch die Wahl der Größe, wie dem Durchmesser der Tropfen, eine Lücke, beispielsweise in Form einer Pore, ohne Material in dieser Schicht generiert werden. Werden in dem Schichtaufbau an der gleichen Stelle über mehrere Schichten hinweg kein Material aufgebracht, so können Lücken über mehrere Materialbahnen hinweg erzeugt werden. Bevorzugt weisen die Lücken eine Ausdehnung innerhalb der Schicht in einem Bereich von 0,01 bis 1 mm, oder bevorzugt in einem Bereich von 0,05 bis 0,7 mm, oder bevorzugt in einem Bereich von 0,1 bis 0,5 mm auf. Bevorzugt weisen die Lücken eine Ausdehnung senkrecht zu der Schicht in einem Bereich von 0,01 bis 1 mm, oder bevorzugt in einem Bereich von 0,05 bis 0,7 mm, oder bevorzugt in einem Bereich von 0,1 bis 0,5 mm auf.

Diese Bahnen können nicht nur linear, sondern auch z. B. in einem schlangenförmigen Muster z.B. parallel zueinander auf den jeweiligen Untergrund aufgetragen werden oder die Auftragungsorientierung kann geändert werden.

Eine Schicht im Sinne der vorliegenden Erfindung kann aus Materialbahnen mit durchgehend weitestgehend gleichem Parallelabstand zueinander bestehen, die sich nicht berühren und erst durch Kontakt mit einer darunter liegenden oder darüber liegenden Schicht miteinander verbunden werden. Es ist ebenso möglich, dass die Schicht aus einer zusammenhängenden Fläche besteht wie z. B. eine flächige Schicht mit oder ohne Aussparungen oder Lücken. Ferner kann die zusammenhängende Schicht durch Materialbahnen gebildet sein, die nicht parallel zueinander verlaufen sondern bei denen sich mindestens zwei Materialbahnen mehr als einmal berühren und so eine zusammenhängende, ggf. geometrische Figuren bilden können, wie Hexagone, kreisförmige oder unsymmetrische Poren. Bevorzugt haben alle Materialbahnen solch einer Schicht mehr als 2, bevorzugt mehr als 5 noch mehr bevorzugt mehr als 10 Berührungspunkte mit benachbarten Materialbahnen.

Bevorzugt ist eine Schicht in einem erfindungsgemäßen Verfahren dadurch gekennzeichnet, dass sie auf dem gleichen Untergrund entsteht. Dabei kann eine Schicht im Sinn der vorliegenden Erfindung auch aus mehreren sich nicht berührenden Flächen bestehen oder aus Materialbahnen bestehen, die zwischen den Flächen und/oder Materialbahnen bei der Auftragung einen Abstand von mindestens 5 Materialbahndicken, bevorzugt mindestens 10 Materialbahndicken, mehr bevorzugt mindestens 20 Materialbahndicken, aufweisen (Lücken), die erfindungsgemäß auf einen Untergrund aufgebracht werden. Ein derartiger Aufbau kann beispielsweise als Verstärkungsringe für Schnürsenkel bei einem Schuhoberteil genutzt werden.

Der Untergrund einer neu aufzutragenden Schicht in einem erfindungsgemäßen Verfahren kann z. B. die plane Basisplatte, eine Zwischenlage oder die zuletzt aufgetragene Schicht darstellen. In einer weiteren Ausführungsform der vorliegenden Erfindung ist der Untergrund für eine neu aufzutragende Schicht in einem erfindungsgemäßen Verfahren nicht nur die zuletzt aufgetragene Schicht sondern auf mehr als eine der bereits aufgetragenen Schichten (z. B. bei Aussparungen oder Lücken auf der zuletzt aufgetragenen Schicht oder einer kleineren zuletzt aufgetragenen Schicht gegenüber der neuen und der vorher aufgetragenen Schicht). Eine mögliche Ausgestaltung ist die Auftragung der ersten der zwei Schichten eines vollflächigen Musters und/oder Schriftzugs auf die zweite Schicht der die Wabenstruktur bildenden Schichten und die zweite Schicht der aus parallelen, um 90° gedrehten Bahnen bestehenden ersten beiden Schichten. Durch die großen Abstände (Aussparungen) in der dritten und vierten Schicht (das Wabenmuster) werden die Materialbahnen der ersten der beiden Muster/Schriftzug-Schichten von einer Düse in einem erfindungsgemäßen Verfahren sowohl auf die die Hexagonale bildendenden Materialbahnen der vierten Schicht als auch in den Aussparungen der Wabenstruktur auf die im Verhältnis zu den Materialbahnen der ersten Schicht um 90° versetzten Materialbahnen der zweiten Schicht aufgetragen.

Entsprechend richtet sich eine Ausführungsform der vorliegenden Erfindung auf Flächenabschnitte und dreidimensionale Objekte bzw. erfindungsgemäße Verfahren resultierend in diesen Flächenabschnitten bzw. dreidimensionalen Objekten, worin mindestens eine Schicht auf zwei oder mehr zuvor aufgetragene Schichten aufgetragen wird. Dies geschieht z. B. wenn eine zweite Schicht, die auf eine untere ersten Schicht aufgetragen wurde, Abstände zwischen Materialbahnen, Lücken oder andere geometrische Aussparungen (z. B. hexagonale Aussparungen) aufweist, die so groß sind, dass neu aufgetragene Materialbahnen einer dritten Schicht nicht nur auf dem Material der zweiten Schicht aufliegt sondern sich das Material durch das Fließverhalten im fließfähigen Zustand sich aufgrund der Abstände zwischen den Materialbahnen der zweiten Schicht oder den Lücken in der zweiten Schicht direkt auf das Material der ersten Schicht mit ablagert. Die Schicht ist in diesem Fall jedoch immer noch durch ihre zueinander parallelen Materialbahnen bzw. zusammenhängende Fläche oder zusammenhängenden Materialbahnen, die asymmetrische oder geometrische Figuren wie Waben formen, definierbar.

Insbesondere bei der Bildung mindestens einer Schicht durch Auftrag einer Materialbahn in Form von Tropfen kann ein Kontakt einer zuvor aufgebrachten Schicht mit einer danach aufgebrachten Schicht ermöglicht werden, die bei einer vollflächigen Beschichtung der Basisplatte oder der vorherigen Schicht nicht möglich wäre.

Das Dickenprofil einer einzelnen Materialbahn kann entsprechend während der Extrusion in Längsrichtung verändert werden. Insbesondere ist es von Bedeutung, dass dabei auch eine minimale Dicke von 0 mm erreicht werden kann (keine Extrusion an dieser Stelle). Hierdurch lässt sich die Materialablage über Teile oder die gesamte Breite einer Materialbahn abstellen und Aussparungen oder Lücken in einer Schicht eines Flächenabschnitts erreichen.

Eine zweckmäßige Vorgehensweise zur Darstellung von Lücken (Ausnehmungen) im Bauteil ist es, die Düsenöffnung während des Spritzens (Jetting) oder Extrudierens in den entsprechenden auszusparenden Bereichen zu schließen oder den Materialfluss durch die Düse an dieser Stelle zu unterbrechen und nach deren Überschreitung wieder zu öffnen bzw. den Materialvortrieb vor der Düse zu stoppen und nach Überschreitung wieder zu starten.

Für den Zusammenhalt der Materialbahnen innerhalb einer Schicht, der Schichten untereinander, bzw. der interlaminaren Festigkeit des fertigen Bauteils ist es von Bedeutung, dass die Materialschichten möglich stofflich aneinander anbinden. Hierzu ist es insbesondere vorgesehen, dass die untenliegende Materialbahn bzw. geometrischen Formen wie Wabenstrukturen beim Auftragen einer weiteren Schicht nur teilgehärtet und die Endhärtung erst zusammen mit der Härtung der darüber abgelegten Materialbahnen erfolgt. Dies ist beispielsweise dadurch möglich, dass die Aushärtung des gerade abgelegten Materials mit der Geschwindigkeit gestartet wird, dass noch reaktive Komponenten beim darauf folgenden Zyklus der Materialablage vorhanden sind. Die Rekristallisation noch amorpher Polymere der gerade abgelegten Materialbahn bzw. des abgelegten Materials (bei durchgehenden Schichten oder z. B. Wabenstrukturen) muss dabei nur so weit eingestellt werden, dass sie zumindest dimensionsstabil bleibt, also nicht davon fließt. Bevorzugt wird die Aushärtegeschwindigkeit so eingestellt, dass die Endhärtung zusammen mit der Härtung der unmittelbar darüber abgelegten Materialbahn erfolgt.

Wie bereits erwähnt, können auch innerhalb einer Schicht und auch innerhalb einer Materialbahn unterschiedliche Materialzusammensetzungen verwendet werden. Dies ist z. B. durch Mehrkopfextrusion möglich und erlaubt z. B. das nacheinander aber in der gleichen Schicht Auftragen von unterschiedlichen Materialien (z. B. unterschiedliche Farben innerhalb einer Schicht).

Es ist jedoch bevorzugt, dass eine Schicht jeweils aus dem gleichen Polymer oder Reaktivharz besteht, unabhängig davon, welche weiteren Zusatzstoffe diesem Polymer oder Reaktivharz zugefügt sind. Entsprechend richtet sich eine bevorzugte Ausführungsform auf ein erfindungsgemäßes Verfahren worin jede Schichte eines Flächenabschnitts aus Materialbahnen mit demselben Polymer oder Reaktivharz bestehen. Eine weitere Ausführungsform richtet sich auf ein erfindungsgemäßes Verfahren worin jede Schicht eines Flächenabschnitts aus Materialbahnen mit demselben Polymer oder Reaktivharz bestehen.

### Flächenabschnitt

Ein "zweidimensionaler Flächenabschnitt" zur Verwendung in der Herstellung eines dreidimensionalen Körpers im Sinne der vorliegenden Erfindung bezieht sich auf ein Gebilde wobei die Ausdehnung - nach Erstellung durch ein generatives Herstellungsverfahren und vor Verformung in ein dreidimensionales Objekt - der einzelnen Schichten in Richtung X- und Y-Achse (ΔX und ΔY) in einem gedachten kartesischen Koordinatensystem jeweils mindestens um einen Faktor 5, wie etwa um einen Faktor 10, bevorzugt um mindestens einen Faktor 20, mehr bevorzugt um mindestens einen Faktor 30 größer ist als die Höhe des Flächenabschnitts, die durch die Anzahl der gebildeten Schichten bestimmt wird (Ausdehnung in Z-Richtung: ΔZ). Ein Flächenabschnitt im Sinne der vorliegenden Erfindung ist in anderen Worten ein bevorzugt flächiger Gegenstand, der aus 1 bis maximal 50 bzw. bei einem erfindungsgemäßen Verfahren, in dem eine erste Schicht umfassend sich nicht berührende, bevorzugt parallel zueinander verlaufende Bahnen aufgetragen wird aus 2 bis maximal 50 Schichten besteht. Der Ausdruck "2 bis maximal 50 Schichten" bezieht sich bei einem Flächenabschnitt im Sinne der vorliegenden Erfindung auf die Stelle des Flächenabschnitts mit der maximalen Anzahl an Schichten, die in einem erfindungsgemäßen Verfahren orthogonal zur Arbeitsebene aufgetragen werden (übereinander gelagerte Schichten). In anderen Worten, an keiner Stelle eines gemäß einem erfindungsgemäßen Verfahren hergestellten Flächenabschnittes werden in einem erfindungsgemäßen Verfahren mehr als 50 Schichten übereinander aufgetragen, jedoch können z.B. an anderen Stellen auch weniger Schichten übereinander aufgetragen werden.

In einer bevorzugten Ausführungsform liegt die Anzahl der Schichten, die den zweidimensionalen Flächenabschnitt bilden, im Bereich von 2 bis 50, bevorzugt im Bereich von 2 bis 30, mehr bevorzugt im Bereich von 2 bis 20, noch mehr bevorzugt im Bereich 2 bis 16.

In einer weiteren bevorzugten Ausführungsform beträgt die Anzahl der Schichten 1, wobei diese Schicht eine flächige Schicht mit oder ohne Aussparungen darstellt.

Bevorzugt beträgt die Höhe eines Flächenabschnitts (orthogonale Ausdehnung des Flächenabschnitts zur Schichtausrichtung (Z-Achse) = Anzahl übereinander angeordneter Schichten) maximal 6,25 cm, mehr bevorzugt maximal 1 cm, mehr bevorzugt maximal 0,5 cm, noch mehr bevorzugt maximal 0,25 cm. Bevorzugt beträgt die minimale Höhe eines Flächenabschnitts minimal 0,025 mm, mehr bevorzugt minimal 0,1 mm, noch mehr bevorzugt minimal 0,2 mm wie etwa 0,5 mm.

Bevorzugt besteht ein Flächenabschnitt hergestellt gemäß eines erfindungsgemäßen Verfahrens aus 1 bis 50 Schichten, bevorzugt 2 bis 50 Schichten, wobei jede Schicht unabhängig voneinander eine Dicke (Höhe) im Bereich von 0,025 mm bis 1,25 mm, mehr bevorzugt in einem Bereich von 0,1 mm bis 0,9 mm aufweist.

In einer bevorzugten Ausführungsform beträgt die Fläche eines Flächenabschnitts der gemäß eines erfindungsgemäßen Verfahrens hergestellt wird, mindestens 5 cm², bevorzugt mindestens 10 cm², mehr bevorzugt mindestens 25 cm² wie etwa mindestens 40 cm², mindestens 50 cm² oder mindestens 100 cm², jedoch sind die maximalen orthogonalen Ausdehnungen in der Arbeitsebene jeweils mindestens um einen Faktor 5, besser um einen Faktor 10, bevorzugt um einen Faktor 20, mehr bevorzugt um einen Faktor 30, noch mehr bevorzugt mindestens um einen Faktor 50 größer ist als die maximale Abweichung in der Z-Ebene.

Bevorzugt werden funktions- und gewichtsoptimierte Strukturen in einem erfindungsgemäßen Verfahren wie z. B. Wabenstrukturen durch das erfindungsgemäße Verfahren erzeugt. Ein zweidimensionaler Flächenabschnitt kann jedoch auch funktions- und gewichtoptimierte Strukturen enthalten (zum Beispiel eine Wabenstruktur in der Mitte oder als letzte Schicht), die separat hergestellt und auf den zweidimensionaler Flächenabschnitt bzw. auf eine Schicht eines noch unfertigen zweidimensionalen Flächenabschnitts gelegt werden können. Sinnvoller Weise greift man dabei auf ein Standardprodukt zurück, welches vor dem Einlegen zugeschnitten wird. Das Material der Struktur kann Kunststoff, Papier, FVK, Glasfasermatte, Metall oder Keramik sein.

In einer bevorzugten Ausführungsform besitzt ein Flächenabschnitt mindestens eine Schicht, die aus zueinander parallelen Materialbahnen oder aus einer durchgehenden Fläche besteht. Die Bahndichte der Materialbahnen liegt bei Schichten die aus einer durchgehenden Fläche besteht bei 100%. Die Bahndichte der Materialbahnen liegt bei einer Schicht, die aus zueinander parallelen Materialbahnen bestehen generell in einem Bereich von 0,1% (1000-facher Abstand zwischen zwei Bahnen bezogen auf die Materialbahndicke) bis 100% (Fläche, kein Abstand zwischen den aufgetragenen Materialbahnen), besonders bevorzugt zwischen 1% und 100%, z.B. zwischen 10% und 100%.

### Aushärtevorgang

Nach Auftragen wenigstens zweier Schichten in einem erfindungsgemäßen Verfahren und ggf. nach Auftragen weiterer Schichten zur Herstellung eines Flächenabschnitts im Sinn der vorliegenden Erfindung kann eine Stoffmischung z. B. kalte oder heiße Polymerisation bzw. Polyaddition oder Polykondensation, Addition (z. B. PU-Addition) oder Kondensation oder auch Initiierung durch elektro-magnetische Strahlungen, insbesondere UV-Strahlung, zum Aushärten gebracht werden. Thermisch härtende Kunststoffmischungen können durch eine entsprechende IR-Strahlungsquelle ausgehärtet werden.

Entsprechend richtet sich eine bevorzugte Ausführungsform auf ein Verfahren in dem die Aushärtung des zweidimensionalen Flächenabschnittes durch Absenken der Temperatur der Materialbahnen unterhalb des Temperaturbereichs des Schmelzbereiches einer fließfähigen und aushärtbaren Stoffmischung (die Auftragungstemperatur zum Beispiel in einem FFF-Verfahren liegt entsprechend innerhalb oder bevorzugt oberhalb des Schmelzbereiches der entsprechenden fließfähigen und aushärtbaren Stoffmischung) erreicht wird.

Eine weitere bevorzugte Ausführungsform richtet sich entsprechend auf ein Verfahren in dem die Aushärtung des zweidimensionalen Flächenabschnittes durch den Einsatz eines UV-aktivierbaren Härters erfolgt. Geeignete UV aktivierbare Härter sind dabei zum Beispiel Produkte der Firma BASF unter dem Markennamen Irgacure die je nach chemischer Zusammensetzung bei verschiedenen Wellenlängen durch photochemische Freisetzung von Radikalen eine Härtungsreaktion bei geeigneten häufig doppelbindungstragenden Verbindungen initiieren.

Im Stand der Technik sind verschiedene Zwei- oder Mehrkomponentensyteme beschrieben, die verdruckt werden können. So ist beispielsweise aus der DE 19937770 A1 ein Zweikomponentensystem bekannt, dass eine Isocyanat-Komponente und eine isocyanat-reaktive Komponente umfasst. Von beiden Komponenten werden Tropfenstrahlen erzeugt, die so ausgerichtet werden, dass sie sich zu einem gemeinsamen Tropfenstrahl vereinigen. In dem gemeinsamen Tropfenstrahl setzt die Reaktion der Isocyanat-Komponente mit der isocyanat-reaktiven Komponente ein. Der gemeinsame Tropfenstahl wird auf ein Trägermaterial gelenkt, wo er unter Ausbildung eines polymeren Polyurethans zum Aufbau eines dreidimensionalen Körpers verwendet wird.

Ein Flächenabschnitt kann von der planen Basisplatte abgelöst werden. Dies kann vor einer Formung ganz erfolgen oder zunächst teilweise als Bestandteil des Formprozesses des dreidimensionalen Objektes. Sollte zwischen einer planen Basisplatte und einer erste Schicht gemäß eines erfindungsgemäßen Verfahrens eine Zwischenlage liegen, bezieht sich der Ausdruck ablösen des ausgehärteten Flächenabschnitts von der planen Basisplatte auf das Ablösen des Flächenabschnitts zusammen mit der Zwischenlage (wie ein Textil oder eine Folie) von der planen Basisplatte.

### Dreidimensionales Objekt, dessen Außenfläche wenigstens einen Flächenabschnitt umfasst. der gemäß dem hierin beschriebenen Verfahren hergestellt wurde

Bei einen dreidimensionalen Gebilde im Sinne der vorliegenden Erfindung kann es sich um Teile einer Fußbekleidung, wie einen Schuh, oder um ein Kleidungsstück oder einen Teil eines Kleidungsstückes handeln, wie z. B. Protektionskleidung oder Teile von Protektionskleidung, z. B. Protektoren bei Motorradkleidung, individuell geformte Filter, Schläuche, Bälge, Faltenbälge, Luftfedern, Bandagen, Korsette, Strümpfe etc.

In einer bevorzugten Ausführungsform handelt es sich bei einen dreidimensionalen Gebilde um eine Fußbekleidung bzw. Teil davon und ein Teil oder die gesamte Außenfläche, wurde gemäß des hierin beschriebenen Verfahrens hergestellt, bevorzugt handelt es sich bei einen dreidimensionalen Gebilde um oder ist ein Teil des Schuhoberbereichs, der auf einer Schuhsohle befestigt und fixiert ist.

In einer weiteren bevorzugten Ausführungsform handelt es sich bei einen dreidimensionalen Gebilde um einen gewölbten, z. B. dem Schulterbereich oder Oberarmbereich angepassten, bevorzugt individuell angepassten, Protektor z. B. für Schultern, Oberarme oder Ellbogen wie er z. B. bei Motorradbekleidung Verwendung findet, das gemäß dem hierin beschriebenen Verfahren hergestellt wird.

### Formen

Aus einem zweidimensionalen Flächenabschnitt kann ein dreidimensionales Objekt durch jedes bekannte Formgebungsverfahren hergestellt werden, solange die Bedingungen dieses Verfahrens (z. B. hohe Temperatur) nicht zu einer Zerstörung des Flächenabschnitts führen. Mögliche Formgebungsverfahren sind z. B. Biegen, Falten, Formgebung durch Auflegen eines zweidimensionalen Flächenabschnitts auf einen Leisten, Thermoformen bei Anwesenheit mindestens eines thermoplastischen Polymers in einem zweidimensionalen Flächenabschnitt (Thermoplaste erweichen bei Erwärmung. Sie können dann bei geringen Umformkräften in eine neue Form gebracht werden. Nach der Abkühlung behalten sie diese bei.) etc. Es kann auch eine Kombination der vorstehend genannten Formgebungsverfahren gleichzeitig oder nacheinander erfolgen. Bevorzugt wird der zweidimensionale Flächenabschnitt in ein dreidimensionales Objekt durch auflegen auf einen Leisten geformt.

Bei dem Formen in Schritt VI), iv) oder VI. der erfindungsgemäßen Verfahren, wird der ausgehärtete Flächenabschnitt bevorzugt in mindestens zwei zueinander abgewinkelte Abschnitte geformt. Bevorzugt wird der ausgehärtete Flächenabschnitt in zwei abgewinkelte Abschnitte geformt. Bevorzugt werden die mindestens zwei abgewinkelten Abschnitte bei dem Formen in einem Bereich von 20 bis 90 °, oder bevorzugt in einem Bereich von 30 bis 90 °, oder bevorzugt in einem Bereich von 40 bis 90 ° zueinander ausgerichtet.

Die mindestens zwei zueinander abgewinkelten Abschnitte können gleiche Flächeninhalte oder unterschiedliche Flächeninhalte aufweisen. Unter gleichen Flächeninhalten wird bevorzugt ein Unterschied der Flächeninhalte in einem Bereich von weniger als 10 %, oder bevorzugt von weniger als 5 %, oder bevorzugt von weniger als 3 %, bezogen auf die Gesamtfläche des ausgehärteten Flächenabschnitts verstanden. Unter unterschiedlichen Flächeninhalten wird folglich ein Unterschied der Flächeninhalte von 10 % und mehr verstanden. Bevorzugt weist einer der abgewinkelten Abschnitte einen Flächeninhalt auf in einem Bereich des 2 bis 100 fachen, oder bevorzugt in einem Bereich des 3 bis 80 fachen, oder bevorzugt in einem Bereich des 5 bis 70 fachen, bezogen auf den Flächeninhalt des hierzu abgewinkelten Abschnittes.

Bevorzugt wird der ausgehärtete Flächenabschnitt um mindestens den zweifachen Betrag, oder bevorzugt um mindestens den dreifachen Betrag, oder bevorzugt um mindestens den fünffachen Betrag der Dicke des Flächenabschnitts an seiner dicksten Stelle, jeweils bezogen auf den bei dem Formen entstehenden größeren Flächenabschnitt, verformt. Weiterhin bevorzugt wird der ausgehärtete Flächenabschnitt in einem Bereich des 2 bis 1000 fachen, oder bevorzugt in einem Bereich des 3 bis 500 fachen, oder bevorzugt in einem Bereich des 5 bis 100 fachen der Dicke an der dicksten Stelle des ausgehärteten Flächenabschnittes verformt.

### Fixieren

Das Fixieren eines dreidimensionalen Objektes aus einem zweidimensionalen Flächenabschnitt erfolgt wie in Anspruch 1 definiert.

Erfindungsgemäss erfolgt die Fixierung eines dreidimensionalen Objektes, das aus einem zweidimensionalen Flächenabschnitt geformt wurde, durch Verbinden von Punkten oder Flächen des dreidimensionalen Objektes miteinander Z. B. kann ein Schlauch durch Verbinden von zwei Längsflächen eines zweidimensionalen Flächenabschnitts fixiert werden oder ein zweidimensionaler Flächenabschnitt kann nach Formen zu einem Schuhoberteil durch Verbinden seiner Fersenbereiche fixiert werden.

Eine Fixierung kann auch durch eine Kombination mit einer zusätzlichen Fixierung des dreidimensionalen Objektes auf ein anderes Objekt erreicht werden, z. B. Fixieren eines Schuhoberteils an den Fersenbereichen und durch Verbinden mit einer Schuhsohle.

Eine Fixierung erfolgt durch Verschweißen, Kleben, Klammern, Tackern, Nageln, Nieten, Stecken mindestens einer Teilfläche des erfindungsgemäßen dreidimensionalen Gegenstandes mit mindestens einer weiteren Teilfläche des erfindungsgemäßen dreidimensionalen Gegenstandes .

Die Erfindung wird im Folgenden anhand von Beispielen und den Figuren 1 bis 11 näher erläutert. Fig. 1 zeigt einen typischen FFF-Verfahrensaufbau mit einem Polymer/Stoffmischungsvorrat in Form einer Polymerdrahtspule 1, einem Extruder 2, einer Auslassdüse 3 mit einem Auslassdurchmesser 4, wobei aus der Auslassdüse 3 eine aus der Polymerdrahtspule verflüssigte Stoffmischung als Materialbahn auf eine Unterlagen aufgetragen wird. Dabei werden mehrere Materialbahnen auf einer Unterlage in Form einer planen Basisplatte 5 als einzelne Schicht erzeugt, die eine durchgehende Fläche bestehend aus verbundenen Materialbahnen, eine Fläche bestehend aus miteinander verbundenen geometrischen Formen, wie einer Wabenstruktur, bilden können. Konkret ist in Fig. 1 schematisch der Fertigungsprozess eines zweidimensionalen Flächenabschnitts auf der planen Basisplatte 5 dargestellt, wobei eine erste Schicht 6 und eine zweite Schicht 7 bereits fertiggestellt wurden und nun eine dritte Schicht 7' auf die zweite Schicht 7 aufgebracht wird.

Fig. 2 zeigt die plane Basisplatte 5 mit einem darauf projizierten kartesischen Koordinatensystem mit den Achsen X, Y und Z.

In Fig. 3 ist die Auftragung von Materialbahnen für eine erste Materialschicht auf der planen Basisplatte 5 mittels der Auslassdüse in Form einer Spritzdüse 3 abgebildet. Die erste Schicht 6 setzt sich aus einzelnen Materialbahnen 6₁ bis 6₈ zusammen.

Fig. 4 zeigt auf der planen Basisplatte 5 mittels der Spritzdüse 3 aufgetragene, parallel zueinander verlaufende Materialbahnen einer ersten Ebene 6', die einen Orientierungswechsel aufweisen und parallel zueinander verlaufende Materialbahnen einer ersten Ebene 6", die in Schlangenlinien aufgetragen wurden.

Die Fig. 5 stellt schematisch das Auftragen einer zweiten Schicht 7 auf eine erste Schicht 6 dar, wobei die Materialbahnen 7₁ bis 7₃ der zweiten Schicht 7 in einem 80° Winkel zur Aufbringungsorientierung der Materialbahnen 6₁ bis 6₈ der ersten Schicht 6 auf die erste Schicht 6 aufgebracht werden.

Fig. 6 zeigt schematisch die Erstellung eines dreidimensionalen Objektes in Form eines Schlauches aus einem zweidimensionalen Flächenabschnitt, bestehend aus sechs Schichten. Bei dieser Ausführungsform liegen die einzelnen Schichten leicht versetzt übereinander, um eine bessere Fixierung (Haftfläche) des Flächenabschnitts nach Formung zum dreidimensionalen Objekt zu ermöglichen.

Fig. 7 zeigt schematisch einen zweidimensionalen Flächenabschnitt zur Herstellung eines Schuhoberteils mit einer späteren Fersenregion 8 des Schuhoberteils.

Fig. 8 zeigt schematisch ein Schuhoberteil als dreidimensionales Objekt, das aus dem zweidimensionalen Flächenabschnitt gemäß Fig. 7 geformt wurde. Das dreidimensionale Objekt kann durch z. B. Verkleben, Tackern, Nieten, Verschweißen, Stecken der Fersenteile im Bereich der Fersenregion 8 fixiert werden. Eine weitere Fixierung ist durch das Aufbringen des Teils eines Schuhoberteils auf eine Schuhsohle 9 möglich. Auch hier können die Sohle und das Teil des Schuhoberteils durch jede bekannte Methode miteinander verbunden werden.

Fig. 9 zeigt schematisch einen zweidimensionalen Flächenabschnitt zur Herstellung eines Schuhoberteils. Dieses besteht aus zwei Schichten von parallelen, um 90° zueinander gedrehten Bahnen, zwei Schichten einer aufeinanderliegenden Wabenstruktur, zwei Schichten eines vollflächigen Musters mit einem Schriftzug sowie eine Schicht Ösenverstärkung. Das Schuhoberteil besitzt wiederum eine Fersenregion 8 und Aussparungen 10 in den Schichten des Musters bzw. Schriftzugs.

Fig. 10 zeigt einen Schuh und Schnürsenkel, wobei der Schuh aus einer Sohle 9 und einem Schuhoberteil hergestellt nach dem erfindungsgemäßen Verfahren besteht.

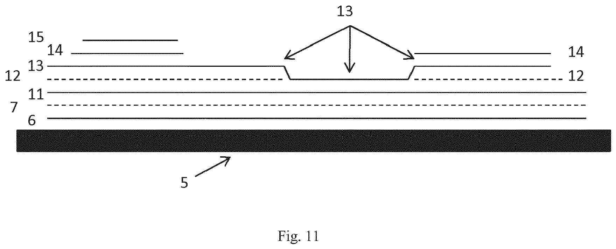

In Fig. 11 ist ein Querschnitt durch Flächenabschnitt auf einer planen Basisplatte 5 mit den Schichten 6, 7, sowie weiteren Schichten 11, 12, 13, 14, 15 dargestellt. In der Abbildung bezeichnen gepunktet dargestellte Schichten 7, 12 diejenigen Schichten, deren Materialbahnen, hier als einzelne Punkte dargestellt, vertikal zur Papierebene aufgebracht sind. Bei den mit durchgehenden Strichen dargestellten Schichten 6, 11, 13, 14, 15 verlaufen die entsprechenden Materialbahnen parallel zur Papierebene. In der in Fig. 11 dargestellten Ausführungsform beträgt die maximale Anzahl an Schichten 6, 7, 11, 12, 13, 14, 15 insgesamt sieben. In dem mittleren Bereich der Abbildung ist zu erkennen, dass die Schicht 12 abschnittsweise ausgespart ist, sodass die Schicht 13 in diesem Aussparungsabschnitt auf der unter der Schicht 12 verlaufenden Schicht 11 zu liegen kommt.

Die folgenden Parameterbereiche sind bevorzugte Parameterbereiche für die Produktion eines erfindungsgemäßen zweidimensionalen Flächenabschnitts mittels FFF:

| | |
|---|---|
| Temperatur der Basisplatte: | im Bereich von 20 °C bis 90 °C, insbesondere 70 °C bis 90 °C, z. B. 80 °C |
| Temperatur der Düse: | im Bereich von 120 °C bis 260 °C |
| Fahrgeschwindigkeit: | im Bereich von 1 mm/s bis 60 mm/s |
| Durchmesser Filament: | im Bereich von 1,5 mm bis 3,5 mm |
| Düsendurchmesser: | im Bereich von 0,3 mm bis 1 mm |
| Schichtdicke: | im Bereich von 0,1 mm bis 0,9 mm (geringere Höhe als |
| Düsendurchmesser resultiert aus Abstand zwischen Düse und oberster Lage < Düsendurchmesser → Material wird zu Strang mit ovalem Querschnitt gepresst) Bahnbreite: | abhängig von Materialdüse im Bereich von 0,3 mm bis 1 mm. |

Die vorgenannten bevorzugten Werte verstehen für die Temperatur der Basisplatte von 70 °C bis 90 °C und 80 °C verstehen sich explizit als kombinierbar mit den allen übrigen Werten der vorstehenden Aufstellung wie Temperatur der Düse und dergleichen.

### Beispiel

Als nicht limitierendes Beispiel wird die Herstellung eines Schuhoberteils und anschließende Herstellung eines Schuhs mit diesem Schuhoberteil beschrieben:
Die zweidimensionale Form zur Erzeugung des Schuhoberteils wurde mit einem German RepRap X400 CE PRO-Edition mit einem Filament aus Thermoplastischem Polyurethan der Shorehärte 60A (ASTM D 2240; Stand 16.04.2015) gemäß Fig. 9 hergestellt.

Folgenden Parameter wurden verwendet:
Temperatur der Basisplatte: 80 °C
Temperatur der Düse: 235 °C
Fahrgeschwindigkeit: 30 bis 40 mm/s
Durchmesser Filament: 2,8 mm
Düsendurchmesser: 0,5 mm
Schichtdicke: 0,2 mm
Bahndichte: Gitterstruktur (untere Lagen): Bahnabstand zwischen einzelnen Bahnen = ein Düsenauslassdurchmesser; Wabenstruktur = Bahndichte variabel; und Grafik (oberste Lagen): 100% (Bahnen berühren sich was zu einer kompletten Schicht führt)

Die dreidimensionale Struktur wurde durch Verschweißen an der Fersenregion fixiert. Weiterhin wurde die dreidimensionale Struktur auf die Sohle durch Schweißen fixiert und so ein kompletter Schuh erzeugt.

Ein weiteres Beispiel für ein dreidimensionales Objekt hergestellt gemäß einem erfindungsgemäßen Verfahren ist ein Schlauch. Der Mantel wird lagenweise gedruckt, 100 %ig gefüllte Lagen + ggf. Wabenstrukturen zur Verstärkung ("Gewebeschlauch"), anschließend verformt (gerollt) und entlang der Naht verklebt oder verschweißt. Bevorzugt wird die Fügekante abgeschrägt gedruckt, sodass eine größere Überlappung und damit Klebeflächen erzielt wird (siehe Fig. 6). Neben der bevorzugten Schichtanzahl von 6 Schichten für einen Schlauch wie in Fig. 6 gezeigt, liegt die bevorzugte Schichtanzahl für Schläuche bei 1 bis 20 Schichten. Bevorzugt weist mindestens eine der Schichten eine Wabenstruktur auf. Eine derartige Verstärkungsstruktur kann, wenn auch nicht so bevorzugt, auch aufgelegt werden.

## Patentansprüche

1. Verfahren zur Herstellung eines dreidimensionalen Objektes, dessen Außenfläche wenigstens einen Flächenabschnitt umfasst, der erzeugt wird indem mittels eines additiven Fertigungsverfahrens auf einer planen Basisplatte (5) zunächst ein Flächenabschnitt in zweidimensionaler Form produziert wird, umfassend die folgenden Schritte:
I) Auftragen wenigstens eines aushärtbaren Polymers oder aushärtbaren Reaktionsharzes mit jeweils einem Elastizitätsmodul gemäß DIN53504, Stand 18.04.2015, im gehärteten Zustand von < 250 MPa in fließfähiger Form als Materialbahnen auf eine plane Basisplatte (5) mittels eines schichtaufbauenden Formgebungsverfahrens zur Erstellung einer ersten Schicht (6);
II) Auftragen einer zweiten Schicht (7) auf die erste Schicht (6) mittels des gleichen schichtaufbauenden Formgebungsverfahren wie in Schritt I);
III) optional Auftragen von 1 bis 48 weiteren Schichten gemäß Schritt II) wobei jeweils eine neue Schicht auf die jeweils vorherige Schicht aufgetragen wird;
IV) Aushärten der Schichten;
V) Ablösen des ausgehärteten Flächenabschnitts von der planen Basisplatte (5);
VI) Formen des ausgehärteten Flächenabschnitts in ein dreidimensionales Objekt durch Biegen des zweidimensionalen Flächenabschnitts, Falten des zweidimensionalen Flächenabschnitts, Formgebung durch Auflegen des zweidimensionalen Flächenabschnitts auf einen Leisten, Thermoformen bei Anwesenheit mindestens eines warmverformbaren Polymers in einem zweidimensionalen Flächenabschnitt oder einer Kombination der vorstehend genannten Formgebungsverfahren; und
VII) Fixieren des dreidimensionalen Objektes durch Verschweißen, Kleben, Klammern, Tackern, Nageln, Nieten, Nähen, Stecken, Kletten, Schnappverbindungen oder einer Kombination daraus mindestens einer Teilfläche des dreidimensionalen Objekts mit mindestens einer weiteren Teilfläche des dreidimensionalen Objekts.

2. Verfahren gemäß Anspruch 1, wobei das schichtaufbauende Formgebungsverfahren Schmelzschichtung Fused Filament Fabrication Ink-Jet-Printing oder Photopolymer-Jetting ist.

3. Verfahren gemäß Anspruch 1 oder 2, wobei die Materialbahnen in Form von Tropfen auf die plane Basisplatte (5) oder eine der Schichten (6, 7), die sich gegebenenfalls bereits auf der Basisplatte (5) befinden, aufgebracht werden.

4. Verfahren nach einem der vorangegangenen Ansprüche, wobei in allen Schichten dasselbe aushärtbare Polymer oder aushärtbare Reaktionsharz verwendet wird.

5. Verfahren nach einem der Ansprüche 1 oder 2, wobei mindestens eine Schicht ein anderes aushärtbares Polymer oder aushärtbares Reaktionsharz umfasst.

6. Verfahren nach einem der vorangegangenen Ansprüche, wobei mindestens ein härtbares Polymer oder aushärtbares Reaktionsharz zum Auftragen einer Schicht in Form einer fließfähigen und aushärtbaren Stoffmischung verwendet wird.

7. Verfahren nach einem der vorangegangenen Ansprüche, wobei mindestens ein härtbares Polymer oder aushärtbares Reaktionsharz zum Auftragen einer Schicht in Form mindestens zweier verschiedener fließfähigen und aushärtbaren Stoffmischungen verwendet wird.

8. Verfahren nach einem der vorangegangenen Ansprüche, wobei die Aushärtung durch Abkühlen von Thermoplasten, durch Kalt- oder Heißpolymerisation, Polyaddition, Polykondensation, Addition oder Kondensation oder durch elektro-magnetische Strahlungen initiierte Polymerisation erfolgt.

9. Verfahren nach einem der vorangegangenen Ansprüche, wobei die Aushärtung durch eine unmittelbar an einer Spritzdüse (3) nachgeführten UV- oder IR-Lichtquelle durchgeführt wird.

10. Verfahren nach einem der vorangegangenen Ansprüche, wobei das dreidimensionale Objekt ein Schuhoberteil ist.

11. Verfahren nach einem der Ansprüche 1 bis 10, wobei das dreidimensionale Objekt ein schlauchförmiges Gebilde, ein Stützkorsett oder ein Protektor für Schulter, Oberarm, Unterarm, Oberschenkel, Schienbein, Torso, Ellbogen oder Knie ist.

12. Verfahren nach einem der Ansprüche 1 bis 11, wobei die erste Schicht auf eine Zwischenlage wie ein Textil oder eine Folie, die die flächige Form der planen Basisplatte an die erste Schicht eines erfindungsgemäßen Verfahren weitergibt, aufgetragen wird und mit der sich die Materialbahnen der ersten Schicht verbinden, so dass diese Zwischenlage Teil des Flächenabschnitts und damit auch Teil des dreidimensionalen Objektes wird.

## Claims

1. Process for producing a three-dimensional object whose exterior area comprises at least one area section produced by initially producing an area section in two-dimensional form on a planar base plate (5) by means of an additive manufacturing process, comprising the steps of:
I) applying at least one hardenable polymer or hardenable reaction resin in each case having a modulus of elasticity in the hardened state according to DIN 53504, dated 18.04.2015, of <250 MPa in liquid form as material tracks onto a planar base plate (5) by means of a layer-building forming process to obtain a first layer (6) ;
II) applying a second layer (7) onto the first layer (6) by means of the same layer-building forming process as in step I);
III) optionally applying 1 to 48 further layers according to step II), wherein in each case a new layer is applied onto the respective preceding layer;
IV) hardening the layers;
V) detaching the hardened area section from the planar base plate (5);
VI) forming the hardened area section into a three-dimensional object by bending the two-dimensional area section, folding the two-dimensional area section, forming by application of the two-dimensional area section onto a last, thermoforming in the presence of at least one thermoformable polymer in a two-dimensional area section or a combination of the aforementioned forming processes; and
VII) fixing the three-dimensional object by welding, adhesive bonding, clamping, stapling, nailing, riveting, sewing, pinning, hook and loop fastening, snap fitting, or a combination thereof, of at least a sub-area of the three-dimensional object to at least a further sub-area of the three-dimensional object.

2. Process according to Claim 1, wherein the layer-building forming process is fused deposition modeling, fused filament fabrication, ink jet printing or photopolymer jetting.

3. Process according to Claim 1 or 2, wherein the material tracks are applied in the form of droplets onto the planar base plate (5) or one of the layers (6, 7) which may already be disposed on the base plate (5).

4. Process according to any of the preceding claims, wherein the same hardenable polymer or hardenable reaction resin is used in all layers.

5. Process according to either of Claims 1 and 2, wherein at least one layer comprises a different hardenable polymer or hardenable reaction resin.

6. Process according to any of the preceding claims, wherein at least one hardenable polymer or hardenable reaction resin for applying a layer is used in the form of one flowable and hardenable composition of matter.

7. Process according to any of the preceding claims, wherein at least one hardenable polymer or hardenable reaction resin for applying a layer is used in the form of at least two different flowable and hardenable compositions of matter.

8. Process according to any of the preceding claims wherein the hardening is effected by cooling of thermoplastics, via low-temperature or high-temperature polymerization, polyaddition, polycondensation, addition or condensation or by polymerization initiated by electromagnetic radiation.

9. Process according to any of the preceding claims, wherein the hardening is performed by a UV or IR light source directly tracking an injection nozzle (3).

10. Process according to any of the preceding claims, wherein the three-dimensional object is a shoe upper.

11. Process according to any of Claims 1 to 10, wherein the three-dimensional object is a hose-shaped article, a support corset or a protector for the shoulder, the upper arm, the lower arm, the thigh, the shin, the torso, the elbow or the knee.

12. Process according to any of Claims 1 to 11, wherein the first layer is applied onto an interlayer such as a textile or a film which transfers the sheetlike shape of the planar base plate to the first layer of a process according to the invention and to which the material tracks of the first layer bond, thus making this interlayer part of the area section and thus also part of the three-dimensional object.

## Revendications

1. Procédé de fabrication d'un objet tridimensionnel, dont la surface extérieure comprend au moins une section de surface, qui est générée en produisant tout d'abord une section de surface sous forme bidimensionnelle sur une plaque de base plane (5) au moyen d'un procédé de fabrication additif, comprenant les étapes suivantes :
I) l'application d'au moins un polymère durcissable ou d'une résine réactive durcissable ayant chacun un module d'élasticité selon DIN53504, version du 18.04.2015, à l'état durci de < 250 MPa sous forme fluide en tant que bandes de matériau sur une plaque de base plane (5) au moyen d'un procédé de façonnage formant des couches pour la création d'une première couches (6) ;
II) l'application d'une deuxième couche (7) sur la première couche (6) au moyen du même procédé de façonnage formant des couches qu'à l'étape I) ;
III) éventuellement l'application de 1 à 48 couches supplémentaires selon l'étape II), chaque nouvelle couche étant appliquée sur la couche précédente respective ;
IV) le durcissement des couches ;
V) le décollement de la section de surface durcie de la plaque de base plane (5) ;
VI) la mise en forme de la section de surface durcie en un objet tridimensionnel par recourbement de la section de surface bidimensionnelle, pliage de la section de surface bidimensionnelle, façonnage par pose de la section de surface bidimensionnelle sur une forme, thermoformage en présence d'au moins un polymère déformable à chaud en une section de surface bidimensionnelle ou une combinaison des procédés de façonnage mentionnés précédemment ; et
VII) la fixation de l'objet tridimensionnel par soudage, collage, clipsage, agrafage, clouage, rivetage, couture, emboîtement, cramponnage, liaison par encliquetage ou une combinaison de ceux-ci d'au moins une partie de la surface de l'objet tridimensionnel à au moins une autre partie de la surface de l'objet tridimensionnel.

2. Procédé selon la revendication 1, dans lequel le procédé de façonnage formant des couches est le dépôt de filament fondu, Fused Filament Fabrication, l'impression à jet d'encre ou la pulvérisation de photopolymère.

3. Procédé selon la revendication 1 ou 2, dans lequel les bandes de matériau sont appliquées sous forme de gouttes sur la plaque de base plane (5) ou sur l'une des couches (6, 7) qui se trouvent éventuellement déjà sur la plaque de base (5).

4. Procédé selon l'une quelconque des revendications précédentes, dans lequel le même polymère durcissable ou la même résine réactive durcissable est utilisé dans toutes les couches.

5. Procédé selon l'une quelconque des revendications 1 ou 2, dans lequel au moins une couche comprend un autre polymère durcissable ou une autre résine réactive durcissable.

6. Procédé selon l'une quelconque des revendications précédentes, dans lequel au moins un polymère durcissable ou une résine réactive durcissable est utilisé pour l'application d'une couche sous la forme d'un mélange de matières fluide et durcissable.

7. Procédé selon l'une quelconque des revendications précédentes, dans lequel au moins un polymère durcissable ou une résine réactive durcissable est utilisé pour l'application d'une couche sous la forme d'au moins deux mélanges de matières fluides et durcissables différents.

8. Procédé selon l'une quelconque des revendications précédentes, dans lequel le durcissement est effectué par refroidissement de thermoplastiques, polymérisation à froid ou à chaud, polyaddition, polycondensation, addition ou condensation ou par polymérisation initiée par des rayonnements électromagnétiques.

9. Procédé selon l'une quelconque des revendications précédentes, dans lequel le durcissement est réalisé par une source de lumière UV ou IR directement asservie à une buse de pulvérisation (3).

10. Procédé selon l'une quelconque des revendications précédentes, dans lequel l'objet tridimensionnel est une partie supérieure de chaussure.

11. Procédé selon l'une quelconque des revendications 1 à 10, dans lequel l'objet tridimensionnel est une structure de forme tubulaire, un corset de soutien ou un protecteur pour épaule, bras, avant-bras, cuisse, tibia, torse, coude ou genou.

12. Procédé selon l'une quelconque des revendications 1 à 11, dans lequel la première couche est appliquée sur une strate intermédiaire, telle qu'un textile ou un film, qui transmet la forme plate de la plaque de base plane à la première couche d'un procédé selon l'invention, et à laquelle les bandes de matériau de la première couche se lient, de telle sorte que cette strate intermédiaire devient une partie de la section de surface et donc également une partie de l'objet tridimensionnel.
